(19)

Europäisches
Patentamt
European
Patent Office
Office européen
des brevets

(11) **EP 1 791 088 A1**

(12) **EUROPEAN PATENT APPLICATION**
published in accordance with Art. 158(3) EPC

(43) Date of publication:
**30.05.2007 Bulletin 2007/22**

(21) Application number: **05782276.9**

(22) Date of filing: **08.09.2005**

(51) Int Cl.:
***G06T 7/00*** *(2006.01)*

(86) International application number:
**PCT/JP2005/016503**

(87) International publication number:
**WO 2006/030687 (23.03.2006 Gazette 2006/12)**

(84) Designated Contracting States:
**DE FR GB IT**

(30) Priority: **14.09.2004 JP 2004267183**

(71) Applicant: **NEC Corporation**
**Minato-ku**
**Tokyo 108-8001 (JP)**

(72) Inventor: **MARUGAME, Atsushi,**
**c/o NEC Corporation**
**Tokyo 108-8001 (JP)**

(74) Representative: **Glawe, Delfs, Moll**
**Patentanwälte**
**Postfach 26 01 62**
**80058 München (DE)**

(54) **DATA COLLATING SYSTEM, DATA COLLATING DEVICE, AND DATA COLLATING METHOD**

(57)    A data collating system includes an acquiring unit 20 configured to acquire data of a target object for collation as an input data 101; and a data collating unit 10 configured to store an original data 102A of an object input from a registering unit 30 and a status data 102A showing a status of the object, which are related to each other, and generate a status change data 106 corresponding to another status based on the original data 101A. The data collating unit collates the input data 101 with the status change data 106, transmits a collation result data 108 to a collation result output unit 40, and outputs the collation result.

# Fig. 1

**Description**

**Technical Field**

The present invention relates to a data collating system, a data collating apparatus, and a data collating method, and more specifically, relates to a data collating system, a data collating apparatus, and a data collating method, in which a collation object changing a status is collated.

**Background Art**

In data, in which a status change occurs and which are represented by biometric data such as a face and voice of a human being, generation and disappearance of a feature of the data are caused through the status change. For example, in the human face, a feature in a younger age disappears with the aging, and a feature corresponding to the age appears. Also, the feature becomes weak because of the feeling and another feature becomes remarkable. Therefore, the data in a status differs from a data in anther status even if the data is of the same object. There is a case that this constitutes an obstacle for collation.

It is generally difficult to obtain data of a same person for each status as collation data and to build up a status dependent database. Therefore, one possible solution of the problem of the status change is to generate an estimated data for the other status of the object on the basis of the data in a certain status stored in the database. As a method for generating the data after the status change from data at a time point, when the data is a face image and the status change is a secular change, there is a method of writing a feature such as wrinkles of the aged face into a younger age face by using computer graphics to generate an image of an aged face.

US Patent 6,556,196 discloses a method in case of a face image. In this method, addition of a feature due to aging and a feature of expressions is sophisticated by using a 3-dimensional (3D) model and the addition of an unclear feature is performed. According to this method, a general model of a deformable face is prepared from a 3D face database, an inputted face image is attached to this model, and the change of the feature including the status change is applied by a modeler.

A preparation procedure of the change of the feature caused through secular change and the expression change is not always established. In such a case that it is not established, it is necessary to imitate a thing existing actually. Therefore, according to the method of generating and collating the data of the status change through a feature addition, it is necessary to perform a process semiautomatically or manually. In addition, unlike local and relatively clear features, addition through write is difficult so that it is difficult perform a process to the status change in a wide area which is difficult be directly understood.

According to the method disclosed in US patent 6,556,196, the feature of the status change previously prepared (for example, positions of wrinkles) is used the feature of the status. Therefore, the same feature of the status change appears in the same positions regardless of the person (the wrinkles are generated in the same positions). In addition, it is not considered whether the feature of the status change (a model) is the feature of the status change suitable for the object face to be collated.

In conjunction with the above description, Japanese Laid Open Patent Application (JP-P2003-44858A) discloses a person authentication apparatus and a method thereof. This person authentication apparatus includes a biological data 1 input section, a biological data 1 reliability determination section, a biological data 1 collation section, a biological data 2 input section, a biological data 2 reliability determination section, a biological data 2 collation section, and a complex determination section. The biological data 1 input section obtains first biological data. The biological data 1 reliability determination section determines reliability of the first biological data on the basis of the first biological data obtained by the biological data 1 input section and input environment data of the first biological data. The biological data 1 collation section collates the first biological data obtained by the biological data 1 input section with biological data 1 registration data, in which data containing the first biological data is previously registered. The biological data 2 input section obtains second biological data. The biological data 2 reliability determination section determines reliability of the second biological data on the basis of the second biological data obtained by the biological data 2 input section and the input environment data of the second biological data. The biological data 2 collation section collates the second biological data obtained by the biological data 2 input section with biological data 2 registration data, in which data containing the second biological data is previously registered. The complex determination section carries out identity determination, that is identification whether or not the identifiable person, on the basis of the reliability determined by the biological data 1 reliability determination section, the reliability determined by the biological data 2 reliability determination section, the collation result by the biological data 1 collation section, and the collation result by the biological data 2 collation section.

Japanese Laid Open Patent Application (JP-A-Heisei 10-171988) discloses a pattern recognition and collating apparatus. This pattern recognition and collating apparatus has a model pattern input section, an input pattern input section, a model vector covariance input section, a model-input variation covariance input section, a covariance weighted average generating section, a first diagonalizing section, a second diagonalizing section, a feature extracting section, and a determination section. The model pattern input section inputs a model pattern M (also model vector). The input pattern input section inputs an input pattern I (also input vector as the recognition target). The model vector covariance input section inputs a covariance matrix Cm of the model vector. The model-input variation covariance input section makes previous leaning of a covariance matrix Cp of the variation of the input pattern corresponding to an individual model pattern to input. The covariance weighted average generating section calculates a weighted average of a model vector covariance matrix inputted from the model vector covariance input section and a model input variation covariance matrix inputted from the model-input variation covariance input section according to

$$Cs \equiv \alpha\,Cm + (1 - \alpha)\,Cp$$

$$(\bullet \text{ is a real number of } 0 < \bullet < 1) \;\ldots\; (1)$$

to generate a new matrix Cs. The first diagonalizing section performs spectral decomposition to the matrix Cs of an output of the covariance weighted average generating section in accordance with

$$Cs = (AQ1/2)(Q1/2AT) \;\cdots\;(2)$$

(A is a normalized characteristic vector matrix of Cs, Q is a diagonal matrix composed of a corresponding characteristic value, Q1/2 is a square root matrix of Q, and AT is a transpose matrix of A), and a matrix $D \bullet Q\text{-}1/2AT$, (Q-1/2 is an inverse matrix of the square root of the matrix Q) is obtained. The second diagonalizing section performs spectral decomposition to the matrix DCmDT, which is made by conversion of the model pattern covariance matrix Cm by the matrix D in accordance with

$$DCmDT = BPBT \;\cdots\;(3)$$

(B is a normalization characteristic vector matrix of DCmDT, P is a diagonal matrix composed of a corresponding characteristic values) to obtain a matrix B. The feature extracting section uses the output Q-1/2AT and B of the first and the second diagonalizing section to generate and hold a matrix H according to

$$H \equiv WBTQ{-}1/2AT \;\cdots\;(4)$$

(W• diag (•1, •2, ... •n), (•i is an appropriate non-minus number)) to extract each feature vector M' and I' according to

$$M' \equiv HM, \quad I' \equiv HI \;\cdots\;(5)$$

from the model pattern M and the input pattern I in a recognition run time. The determining section finds the model pattern having the feature vector, in which a distance

$$\| M' - I' \| \quad (\|*\| \text{ is an Euclidean distance}) \;\ldots\;(6)$$

of the feature vector I' of the input pattern I between the feature vector M' of the model pattern M is smallest, extracted by the feature extracting section to determine (recognize) the input pattern corresponds to which model by this.

**Disclosure of Invention**

The present invention is to provide a data collating system, a data collating apparatus, and a data collating method, in which data of an object in which a status change is generated can be collated in high precision.

Another object of the present invention is to provide a data collating system, a data collating apparatus, and a data collating method, in which a load of an operator can be reduced at collation.

To solve the problem as described above, the data collating apparatus according to the present invention includes an original data storage section, a status change data generating section, and a collation unit. The original data storage section relates and holds an original data of an object and a first status data expressing a status of the object. The status change data generating section generates a plurality of status change data related to the plurality of second status data expressing the plurality of other statuses of the object on the basis of the original data. The collating unit compares input data as an inputted data of the object for collation with each of the plurality of status change data to extract the status change data, in difference between the input data and the plurality of status change data is smallest.

The data collating apparatus as described above further includes a status change data storage section to store the plurality of status change data. The original data and the plurality of status change data are sent to the collating unit as the plurality of collation data. The collating unit compares the input data with each of the plurality of collation data to extract the collation data, whose difference from the input data is smallest.

In the data collating apparatus as described above, the collating unit performs the extraction when the difference is smallest and also when the difference is equal to or less than a threshold value.

In the data collating apparatus as described above, the status change data generating section has a status change processing section and status buffers. The status change processing section generates the plurality of status change data corresponding to the plurality of second status data from the original data corresponding to the first status data by using a neural network which has learnt data separated the first status data and the plurality of second status data. Each of the status buffers stores the status change data corresponding to that in the plurality of status change data.

The data collating apparatus as described above further includes a plurality of status dependent component data buffers, a component analyzing section, and a component conversion unit. The plurality of status dependent component data buffers holds a status label showing a third status data as each of the first status data and the plurality of second status data and a component data corresponding to the third status data, and is installed in each of the first status data and the plurality of second status data. The component analyzing section extract the component data from one of the plurality of status dependent component data buffers which has a status label corresponding to the first status data, analyze the original data based on the component data, and output a first analysis result data corresponding to the first status data. The component converting unit converts the plurality of second status data into the plurality of second analysis result data based on the first analysis result data. The status change data generating section has the status change processing section to generate the plurality of status change data based on the plurality of second analysis result data and the plurality of component data of the plurality of status dependent component data buffers, which has the status label corresponding to the plurality of second status data in the plurality of component data buffers.

In the data collating apparatus as described above, the input data and the original data are biometrics data.

In the data collating apparatus as described above, the first status data and the plurality of second status data are data in statuses corresponding to a secular change of the object.

In the data collating apparatus as described above, the target object and the object are a face of a person, and the input data and the original data are the face image data. The first status data and the plurality of second status data are data expressing an expression of a face.

In order to solve the problem as described above, the data collating system according to the present invention includes an acquiring unit to acquire data of the target object for the collation as the input data and the data collating unit to collate the original data of the object with the input data. The data collating unit has the original data storage section, the status change data generating section, and the collating section. The original data storage section relates and holds the original data and the first status data expressing the status of the object. The status change data generating section generates a plurality of status change data related to the plurality of second status data expressing the plurality of other statuses of the object on the basis of the original data. The collating section compares the input data with each of said plurality of status change data to extract one of the plurality of status change data, which has smallest difference from the input data.

In the data collating system as described above, the data collating unit has further a status change data storage section to store the plurality of status change data. The original data and the plurality of status change data are sent to the collating section as a plurality of collation data. The collating section collates the input data with each of the plurality of collation data to extract one of said plurality of collation data, which has the smallest difference from the input data.

In the data collating system as described above, the collating section performs the extraction when the difference is smallest and when the difference is equal to or less than a threshold value.

In the data collating system as described above, the status change data generating section has a status change processing section and status buffers. The status change processing section generates the plurality of status change data corresponding to the plurality of second status data from the original data corresponding to the first status data by using a neural network having learnt the first status data and the plurality of second status data. Each of the buffers stores the status change data corresponding to one of the plurality of status change data.

In the data collating system as described above, the data collating unit further includes a plurality of status dependent component data buffers, a component analyzing section, and a component conversion unit. The plurality of status dependent component data buffers store a status label indicating a third status data as each of the first status data and the plurality of second status data and a component data corresponding to the third status data, and are provided for said first status data and the plurality of second status data. The component analyzing section extracts the component data from one of the plurality of status dependent component data buffers which has the status label corresponding to the first status data, analyze the original data based on the component data, and output a first analysis result data corresponding to the first status data. The component conversion unit converts the first analysis result data to a plurality of second analysis result data corresponding to the plurality of second status data. The status change data generating section has the status change processing section to generate the plurality of status change data based on the plurality of second analysis result data and the component data of one of the plurality of status dependent component data buffers which has the status label corresponding to the plurality of second status data.

In the data collating apparatus as described above, the input data and the original data are biometrics data.

In the data collating apparatus as described above, the first status data and the plurality of second status data are data in a status corresponding to a secular change of the object.

In the data collating apparatus as described above, the target object and the object are a face of a person. The input data and the original data are the face image data. The first status data and the plurality of second status data are data expressing an expression of the face.

In the data collating system as described above, a registering unit is further included to read said original data from the object to supply the original data in relation to the first status data.

In the data collating system as described above, a collation result output unit is further included to output the collation result on the basis of the collation result data outputted from the data collating unit.

In order to solve the problem as described above, the data collating method according to the present invention includes:

(a) acquiring an original data of an object and a first status data indicating a status of the object;
(b) generating a plurality of status change data related to a plurality of second status data indicating another status of a plurality of objects based on said original data;
(c) collating an input data as a data of a target object of collation with each of said plurality of status change data; and
(d) outputting a result of the collation.

In the data collating method as described above, said (c) collating includes (c1) collating said input data with each of said plurality of collation data by using said original data and said plurality of status change data as a plurality of collation data.

In the data collating method as described above, said (b) generating includes (b1) generating said plurality of status change data from said original data by a conversion method having learnt data separated for each of said first status data and said plurality of second status data.

In the data collating method as described above, said (b) generating includes (b2) decomposing said original data into component data corresponding to said first status data to generate a first analysis result data; and (b3) generating said plurality of status change data based on said first analysis result data and said plurality of component data corresponding to said plurality of second status data.

To solve the problem as described above, a computer program product according to the present invention has a programming coding section to execute all steps of the data collating methods described in any one of the items as described above, when is used on a computer.

To solve the problem as described above, the computer program product according to the present invention has the programming coding section to execute all steps of the data collating methods, which is stored in a computer-readable memory section and described in any one of the items as described above.

According to the data collating system, the data collating apparatus, and the data collating method of the present invention, the data of the object occurring the status change can be precisely collated. In addition, the load of the worker at the collation can be reduced.

**Brief Description of Drawings**

Fig. 1 is a block diagram showing the configuration of a data collating system according to a first embodiment of the present invention;

Fig. 2A is a block diagram showing the configuration of a collating section 11 in the data collating system according to the first embodiment of the present invention;

Fig. 2B is a block diagram showing the configuration of the collating section 11 in the data collating system according to a second embodiment of the present invention;

Fig. 3 is a block diagram showing the configuration of a status change data generating section 14 in the data collating system according to the first embodiment of the present invention;

Fig. 4 is a flow chart showing an operation of the data collating system according to the first embodiment of the present invention;

Fig. 5 is a block diagram showing the configuration of the data collating system according to the second embodiment of the present invention;

Fig. 6 is a flow chart showing an operation of the data collating system according to the second embodiment of the present invention;

Fig. 7 is a block diagram showing the configuration of the data collating system according to a third embodiment of the present invention;

Fig. 8 is a block diagram showing a configuration of a component analyzing section 13 in the data collating system according to the third embodiment of the present invention;

Fig. 9 is a block diagram showing the configuration of a status change data generating section 14' in the data collating system according to the third embodiment of the present invention;

Fig. 10 is a block diagram showing the configuration of a component converting section 15 in the data collating system according to the third embodiment of the present invention;

Fig. 11 is a flow chart showing an operation of the data collating system according to the third embodiment of the present invention;

Fig. 12 is a block diagram showing the configuration of the data collating system according to a fourth embodiment of the present invention;

Fig. 13 is a block diagram showing the configuration of a status change data generating section 14'' in the data collating system according to the fourth embodiment of the present invention; and

Fig. 14 is a flow chart showing an operation of the data collating system according to the fourth embodiment of the present invention.

## Best Mode for Carrying Out the Invention

Hereinafter, a data collating system according to the present invention will be described in detail with reference to the attached drawings.

The data collating system according to the present invention is a system for carrying out collation of an object in which a status change occurs. The data collating system is used, for example, for identification in a security system, collation in criminal investigation and academic survey and so on. In embodiments of the present invention, the description is given by exemplifying the collation of a face image of a person, or speech data, in which a change occurs due to secular change. On the other hand, input data 101 used for the collation and original data 102A to be registered in a data collating unit 10 may be data related to images of portions of a human body such as a face and a fingerprint, 1-dimensional data such as speech, biometric data such as 3-dimensional data including a shape of the face, data of plants and animals excluding human beings, and an artificial object indicating the status change while having an individual characteristic like a living organism. A status data 102B causing the status change may be data of face expression change and data of the speech caused by a bad body condition in addition to data of secular change.

[First Embodiment]

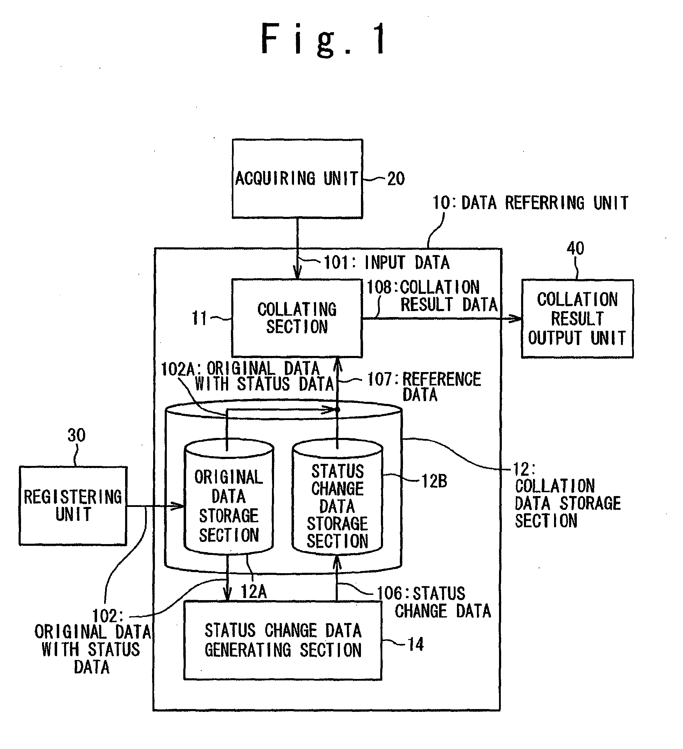

The data collating system according to the first embodiment of the present invention will be described with reference to Figs. 1 to 4.

Fig. 1 is a block diagram showing a configuration of the data collating system according to the first embodiment of the present invention. The data collating system according to the first invention has a data collating unit 10, an acquiring unit 20, a registering unit 30, and a collation result output unit 40, and each unit is connected to the data collating unit 10.

Data such as a face image of a person and speech data for a target of the collation, which are previously inputted into the registering unit 30, are registered in the data collating unit 10 as original data 102A. The data collating unit 10 converts the original data 102A into status change data 106 on the basis of status data 102B accompanying to the registered original data 102A. Here, the status data 102B is a data of the status (for example, age data in case of secular change) caused through the status change of the person as the object of the collation. The data collating unit 10 carries out the collation of input data 101 such as the face image, which has been read by the acquiring unit 20, with the collation data 107 a the original data 102A and the status change data 106. The result of the collation is sent to the collation result output unit 40 as collation result data 108. The collation result output unit 40 displays the collation result on the basis of the collation result data 108.

The acquiring unit 20 has a scanner to read the face image or a recorder to acquire the speech data. The acquiring unit 20 detects a feature portion of the face and the speech from the acquired face image and speech data to send to the data collating unit 10 as input data 101. The scanner used in the acquiring unit 20 is a 2D or 3 D scanner, if the data to be read is an image. The recorder used in the acquiring unit 20 can change the speech data into data usable by a computer. A compression format of a variety of data to be read is not restricted.

The registering unit 30 has a scanner to read a face image or a recorder to acquire a speech data. The registering unit 30 detects a feature portion of the face and speech from the acquired face image and speech data to generate original data 102A. At this time, data such as registration date, age and body condition of a person as the object of the collation are inputted as the status data 102B by using such an input unit as a keyboard. The original data 102A and the status data 102B are related to each other and are sent to the data collating unit 10 as original data 102 with the status data.

The data collating unit 10 is a data processing unit such as a workstation and a personal computer. The data collating unit 10 has a collating section 11, a collation data storage section 12, and a status change data generating section 14. The collating section 11 and the status change data generating section 14 are connected to the collation data storage section 12. On the other hand, the collation data storage section 12 and the status change data generating section 14 may be remotely located and connected to the collating section 11 by a communication line or a network.

The collating section 11 is connected to the acquiring unit 20 via a communication line or a network. The collating section 11 collates the input data 101 received from the acquiring unit 20 as the target of the collation with the collation data 107 received from the collation data storage section 12 to send the collation result data to the collation result output unit 40.

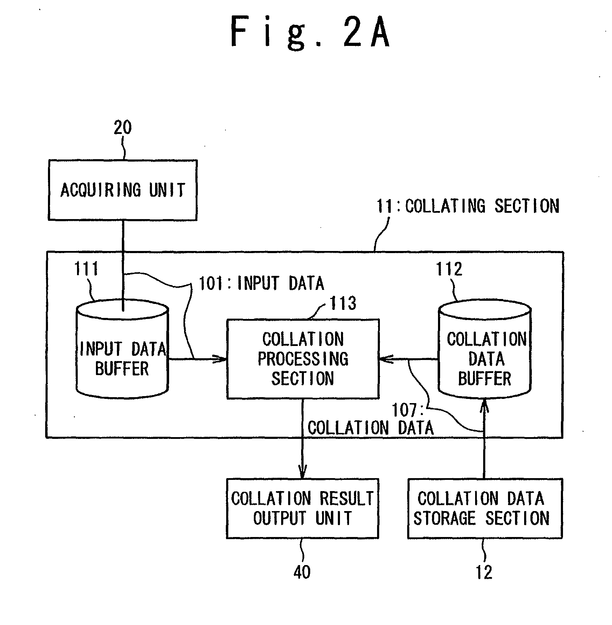

Fig. 2A is a block diagram showing the configuration of the collating section 11 in the data collating system according to the first embodiment of the present invention. The collating section 11 has an input data buffer 111, a collation data buffer 112, and a collation processing section 113. The input data buffer 111 holds the input data 101 received from the acquiring unit 20. The collation data buffer 112 holds the collation data 107 received from the collation data storage section 12. The collation processing section 113 is connected to the input data buffer 111 and the collation data buffer 112. The collation processing section 113 reads out the collation data 107 from the collation data buffer 112 and compares the collation data 107 with the input data 101 read out from the input data buffer 111 to output the collation result data 108 to the collation result output unit 40.

The collation processing section 113 calculates a difference between the collation data 107 and the input data 101. When the difference is smallest, the difference is compared with a set threshold value. When the difference is equal to or smaller than the threshold value, the collation result data 108 indicating that a person to be checked is the original person himself is sent to the collation result output unit 40. Instead, the difference between the collation data 107 and the input data 101 is calculated. Then, the collation data 107 having the smallest difference is extracted and sent to the collation result output unit 40 as the collation result data 108. It should be noted that according to the present invention, a comparing method used for collation is not restricted. However, if the collation between the collation data 107 and the input data 101 can be carried out, the comparing method is not restricted to the above method. In addition, the collation processing section 113 may extract the collation data 107 directly from the collation data storage section 12 not through the collation data buffer 112 and use it for the collation.

The collation data storage section 12 is a storage unit such as a memory and a disk. The collation data storage section 12 has an original data storage section 12A and a status change data storage section 12B. The original data storage section 12A is connected to the registering unit 30 and stores the original data 102 with the status data registered from the registering unit 30. The status change data storage section 12B relates the status change data 106 received from the status change data generating section 14 to corresponding status data 102B and stores them.

The collation data storage section 12, when the original data 102 with the status data is received from the registering unit 30, sends the original data 102 with the status data to the status change data generating section 14 in order to generate the status change data 106. In response to an instruction from the collating section 11, the original data 102A and the status change data 106 are sent to the collating section 11 as the collation data 107.

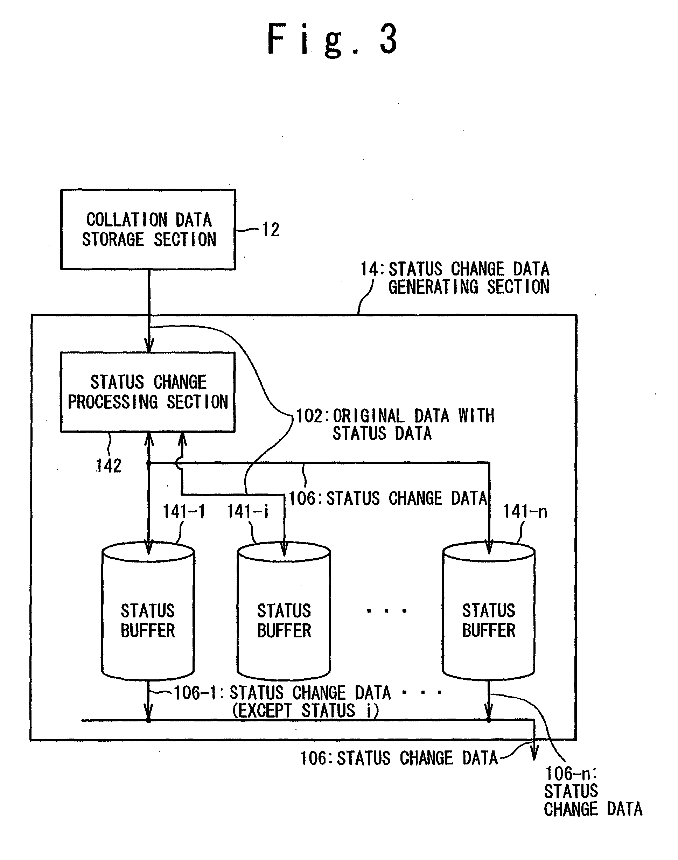

Fig. 3 is a block diagram showing the configuration of the status change data generating section 14 in the data collating system according to the first embodiment of the present invention. The status change data generating section 14 has a plurality of buffers 141-1 to 141-n for each status, which are connected to each other, and a status change processing section 142, which is connected to the plurality of buffers 141-1 to 141-n. Each of the plurality of buffers 141-1 to 141-n (hereafter, to be also referred to as "a status buffer 141") is a storage unit such as a memory and a disk, and the status change processing section 142 is a processing unit such as a CPU or a combination of the processing unit and a program.

The status buffer 141 and the status change processing section 142 are connected to the collation data storage section 12. Each of the plurality of status buffers 141-1 to 141-n is provided for (is related to) the status data 102B different from each other. The status buffer 141 has a status label corresponding to the status data 102B. The status change processing section 142 forms a neutral network which learned a plurality of data classified into a corresponding one of a plurality of statuses of a same person and is provided between the status change processing section 142 and each of the status buffers 141.

It is assumed that the original data 102 with the status data 102B corresponding to the status label of the status buffer 141-i (1 ≤ i ≤ n, n is a natural number) is inputted into the status change processing section 142. In this case, the status change processing section 142 inputs the original data 102A into the status buffer 141-i. Then, the status change data 106 in another status is generated from the original data 102A by using the neutral network. Here, "another status" means a status corresponding to a status data differing from the status data 102B attached to the original data 102A. In this case, it is a status of the status data 102B corresponding to any of the plurality of status buffers 141-1 to 141-n (except for the status buffer 141-i). Therefore, a plurality of status change data 106-1 to 106-n (except for the status change data 106-i) are generated in correspondence to "another status", as status change data 106 of another status.

Each of the plurality of status change data 106-1 to 106-n (except for the status change data 106-i) is inputted into each of the status buffers 141, which has the status label corresponding to each of the status data 102B. In other words, the status change data 106-j (1 ≤ j ≤ n, 1 ≠ j, j is a natural number) is inputted into the status buffer 141-j. The plurality of status buffers 141-1 to 141-n (except for the status buffer 141-i) sends the plurality of status change data 106-1 to 106-n (except for the status change data 106-i,) which are related to the respective status data 102B, to the status change data storage section 12B of the collation data storage section 12.

The collation result output unit 40 is a data-processing unit such as a personal computer. The collation result output unit 40 has a display unit to display the result of the collation on a display screen on the basis of the received collation result data 108. The collation result data 108 is authentication to authenticate that a person as the collation object is the person already registered in the data collating unit 10, the original data 102 with the status data, which is the collation data 108, or the status change data 106 (also accompanied with the status data 102B). The collation result output unit 40 may have an opening and closing mechanism, which carries out opening and closing operations of a gate on the basis of a presence or absence of the authentication, and a locking unit carrying out locking and unlocking of a lock. If the collation result data 108 is the authentication, this collation result allows managing entrance and exit of an institute. On the other hand, in case that the collation result data 108 is the collation data 107, the object and the person as the collation target can be identified based on the original data 102 with the status data, or the status change data 106 of the data collating unit 10.

It should be noted that the original data 102A, the original data 102 with the status data, and the status change data generated on the basis of the original data 102A are attached with an identical identifier. Thus, a source of the data and its related data (not illustrated) can be taken out on the basis of the identifier. The related data is exemplified by the data of the person, if the original data 102A is a face image.

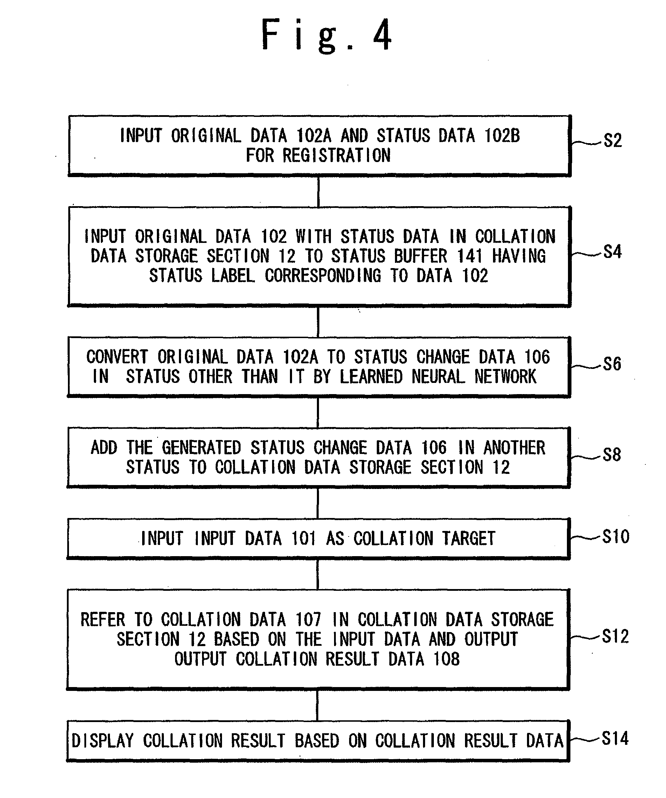

Next, an operation of the data collating system according to the first embodiment of the present invention will be described below. Fig. 4 is a flow chart showing an operation of the data collating system according to the first embodiment of the present invention.

In order to generate and register a collation data 107 before the collation, the face image of a person as the collation target is scanned (imaged) by the registering unit 30 and is supplied to the data collating unit 10 as the original data 102A. At this time, the registration date and the age of the person are inputted as status data 102B-i. The inputted original data 102A and the status data 102B-i are related to be each other and stored in the original data storage section 12A of the collation storage section 12 as the original data 102 with the status data (step S2).

The original data 102 with the status data in the original data storage section 12A is outputted to the status buffer 141 (for example, the status buffer 141-i) which has the status label corresponding to the status data 102B-i (step S4). The status change processing section 142 of the status change data generating section 14 converts the original data 102A supplied to the status buffer 141-i by using the neutral network, and generates a plurality of status change data 106-1 to 106-n in the plurality of other statuses and the plurality of status change data 106-1 to 106-n are recorded in ones of the plurality of status buffers 141-1 to 141-n (except for the status buffer 141-i) corresponding to the status data 102B (step S6). That is, the status change data 106-j is supplied to status buffer 141-j.

At this time, on the basis of the relation between the status data 102B-i accompanied to the original data 102A and other status data 102B-j, a change rate to another status change data 106 and a change parameter such as a change area are determined. For example, in case where the input status data 102Bi is a status data expressing the age of 25, first, the secular changes of the face image (including a change to a younger age) is calculated by using the face image at the age of 25 as a reference, on the basis of the relation between status data 102B-j1 and 102B-j2 at the ages of 20 and 50. Then, an amount of the secular change is added to the original data 102A to generate status change data 106-j1 and 106-j2 in each of the status data 102B-j1 (at the age of 20) and 102B-j2 (at the age of 50).

Each of the status change data 106 of the plurality of status buffers 141-1 to 141-n (except for the status buffer 141-i) is related to the corresponding status data 102B and is sent to the status change data storage section 12B (step S8). In other words, the plurality of status change data 106-1 to 106-n (except for the status change data 106-i) is stored in the status change data storage section 12B.

In the same way, the original data 102A with the status data 102A of face images of a plurality of persons and the status change data 106 are stored in the data collating unit 10 as the collation data 107.

Next, the acquiring unit 20 scans (images) the face image of a person as the collation target and supplies to the collating section 11 of the data collating unit 10 as input data 101 (step S10). When the input data 101 is received, the collating section 11 extracts the original data 102 with the status data and the status change data 106 from the collation data storage section 12 as the collation data 107, performs the comparing process by the collation processing section 113, and sends the collation result data 108 to the collation result output device 30 (step S12). In collation, the collation data 106, whose difference from the input data 101 is smallest and below a set threshold value, is authenticated as the identified person. It should be noted that the collation data, whose difference is smallest may be authenticated as the identified person without definition of the threshold value. In this case, if the threshold value is set, highly precious determination of identification becomes possible for collation of the person registered in the data collating unit 10 and the person as the collation target to allow a use for person determination such as security check. It should be noted that if the threshold value is not set, a similar collation data is extracted as the person determination and can be used for specification of a criminal registered in the data collating unit 10 on the basis of the person photograph as the collation target.

The collation result output unit 30 displays the collation result on the display screen on the basis of the received collation result data 108. The display result contains the person authentication indication showing that the person as the collation target is the person already registered in the data collating unit 10 and the original data 102 with the status data, or the status change data 106 (accompanied with situation data 102B,) which are the collation data 108, as an image and a text (step S14).

As described above, the collation is performed through generation of the status change data 106-1 to 106-n corresponding to a variety of the status data 102B-1 and 102B-n and, therefore, a high precision collation for the object, whose status changes, can be performed by using only the original data 102A of the object of a status (the status data 102B-i). In addition, a method of generating the status change data 106 can be performed regardless of a time axis, and therefore, when the status change is the secular change, the high precision collation becomes possible for not only the aging change, but also in a direction of becoming younger.

[Second Embodiment]

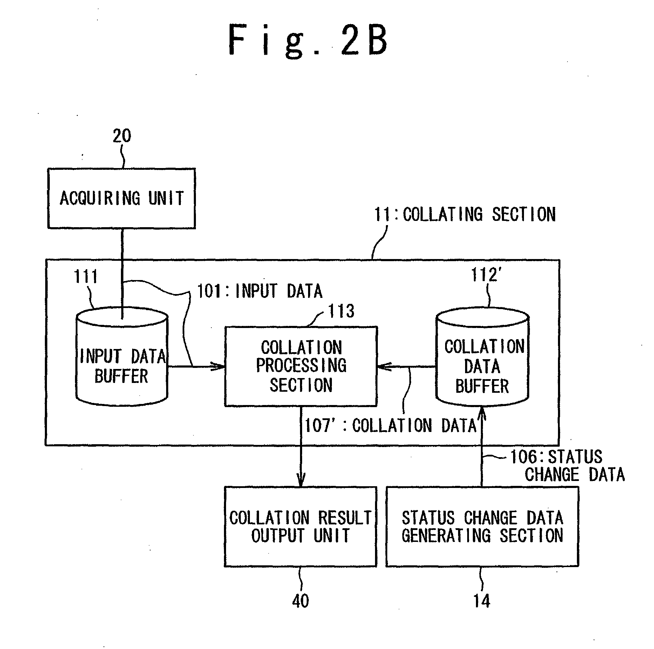

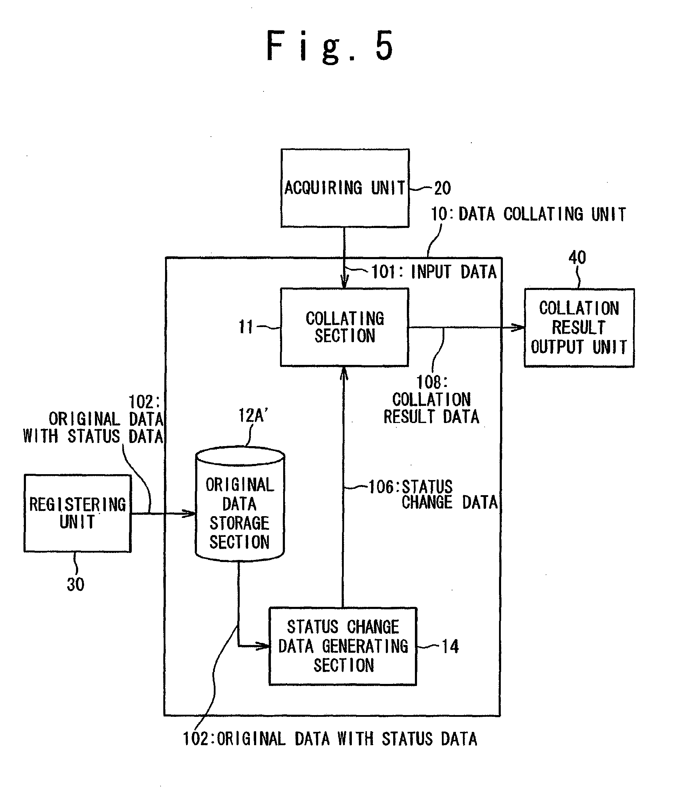

Referring to Figs. 2B, 3, 5, and 6, the data collating system according to the second embodiment of the present invention will be described below. Fig. 5 is a block diagram showing the configuration of the data collating system according to the second embodiment of the present invention. The data collating system in the second embodiment includes the data collating unit 10, the acquiring unit 20, the registering unit 30, and the collation result output unit 40. Each of units is connected to the data collating unit 10.

The data such as a face image and speech data of a person, which are previously received by the registering unit 30 for a target of the collation, are registered in the data collating unit 10 as the original data 102A. The data collating unit 10 converts the original data 102A to status change data 106 on the basis of the status data 102B corresponding to the registered original data 102A. In this case, the status data 102B is the data of the status caused by the status change of the person as the object of the collation. The data collating unit 10 carries out the collation of input data 101 such as the face image read out from the acquiring unit 20 with the status change data 106. The result of the collation is sent to the collation result output unit 40 as the collation result data 108 and the collation output unit 40 displays the collation result on the basis of the collation result data 108.

The configurations of the acquiring unit 20, the registering unit 30, and the collation result output unit 40 are same as those of the first embodiment, and therefore, the description will be omitted here.

The data collating unit 10 is a data processing use exemplified by a workstation and a personal computer. The data collating unit 10 has the collating section 11, an original data storage section 12A', and the status change data generating section 14. The collating section 11 is connected to the status change data generating section 14. The status change data generating section 14 is connected to the original data storage section 12A'. It should be noted that the original data storage section 12A' and the status change data generating section 14 may be remotely located and connected to the collating section 11 by a communication line or a network.

The collating section 11 is connected to the acquiring unit 20 via a communication line or a network. The collating section 11 collates the input data 101 received from the acquiring unit 20 as the target of the collation with the status change data 106 received from the status change data generating section 14, and sends the collation result data 108 to the collation result output unit 40. Fig. 2B is a block diagram showing the configuration of the collating section 11 in the data collating system according to the second embodiment of the present invention. The collating section 11 has the input data buffer 111, a collation data buffer 112', and the collation processing section 113. The input data buffer 111 holds the input data 101 received from the acquiring unit 20. The collation data buffer 112' holds the status change data 106 received from the status change data generating section 14. The collation processing section 113 is connected to the input data buffer 111 and the collation data buffer 112'.

The collation processing section 113 reads out the status change data held in the collation data buffer 11-2' as the collation data 107'. Then, the collation processing section 113 collates the collation data 107' with the input data 101 held in the input data buffer 111 and outputs the collation result data 108 to the collation result output unit 40. The collation processing section 113 calculates the difference between the collation data 107' and the input data 101. When the difference is smallest, the difference is compared with a preset threshold value. When the difference is equal to or smaller than the threshold value, the collation result data 108 indicating that person determination is valid is sent to the collation result output unit 40. Instead, the difference between the collation data 107' and the input data 101 is calculated. Then, the collation data 107' having the smallest difference is extracted and is sent to the collation result output unit 40 as the collation result data 108. It should be noted that according to the present invention, a method of collation is not specifically restricted. However, if the collation between the collation data 107' and the input data 101 can be carried out, the method of collation is not restricted to the above method. In addition, the collation processing section 113 may perform the collation by directly extracting the status change data 106 as the collation data 107' from the status change data generating section 14 not through the collation data buffer 112'.

The original data storage section 12A' is a storage unit such as a memory and a disk unit. The original data storage section 12A' is connected to the registering unit 30 to store the original data 102 with the status data registered from the registering unit 30. When the input data 101 is received by the collating section 11, the original data storage section 12A' generates the status change data 106, and therefore, sends the registered original data 102 with status data to the status change data generating section 14.

Fig. 3 is a block diagram showing the configuration of the status change data generating section 14 in the data collating system according to the second embodiment of the present invention. The configuration and the operation of the status change data generating section 14 are same as those of the first embodiment and the generated status change data 106 is sent to the collating section 11.

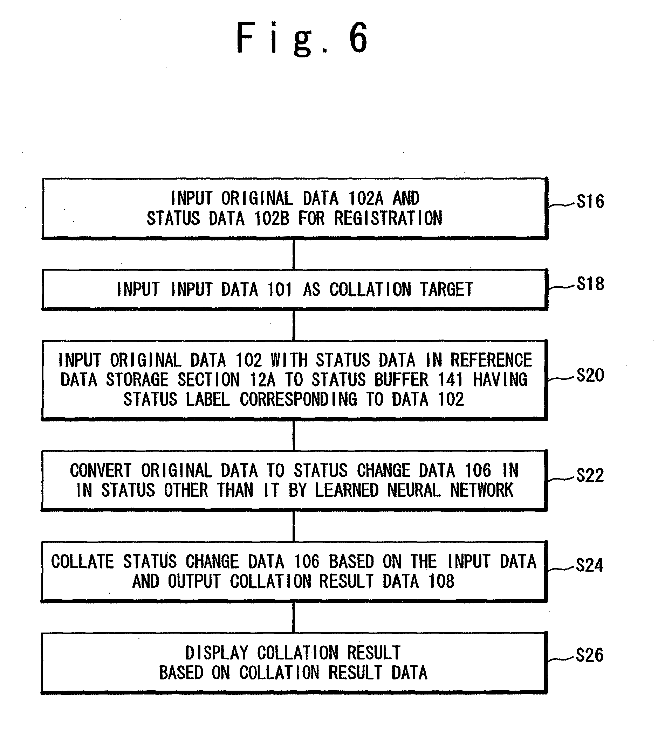

Next, an operation of the data collating system according to the second embodiment of the present invention will be described below. Fig. 6 is a flow chart showing the operation of the data collating system according to the second embodiment of the present invention.

In order to generate and register collation data 107', the face image of a person as the collation target is scanned (imaged) by the registering unit 30 before performing the collation and supplies it to the data collating unit 10 as the original data 102A. At this time, registration date and the age of the person are inputted as the status data 102B. The inputted original data 102A and the status data 102B are related to each other and are stored in the original data storage section 12A' of collation storage section 12' as the original data 102 with the status data (step S16).

Next, the acquiring unit 20 scans (images) the face image of the person as the collation target and supplies it to the collating section 11 of the data collating unit 10 as the input data 101 (step S18). When the input data 101 is received, the original data 102 with the status data stored in the original data storage section 12A' is sent to the status change data generating section 14 and is stored in the status buffer 141-i having the status label corresponding to the status data 102B-i (step S20). The status change processing section 142 extracts the original data 102A from the status buffer 141-i to convert to a plurality of status change data 106-1 to 106-n (except for the status change data 106-i) corresponding to the plurality of other status data 102B-1 and 102B-n (except for the status data 102B-i) (step S22). The operation of the conversion is same as that of the first embodiment, and therefore, the description will be omitted here.

The plurality of generated status change data 106-1 to 106-n (except for the status change data 106-i) are stored in the plurality of status buffers 141-1 to 141-n (except for the status buffer 141-i) corresponding to the respective status data 102B and is sent to the collating section 11 in response to an instruction from the status change processing section 142. It should be noted that the status change data 106 may be extracted in accordance with a control of the collating section 11. The collating section 11 carries out the comparing process with the input data 101 in the collation processing section 113 by assigning the plurality of status change data 106-1 to 106-n (except for the status change data 106-i) sent from the plurality of buffers 141-1 to 141-n (except for the status buffer 141-i,) as the collation data 107'. Then, the collating section 11 sends the collation result data 108 as the comparing result data to the collation result output unit 40 (step S24). The operation of the collation is same as that of the first embodiment.

The collation result output unit 30 displays the collation result on the display screen on the basis of the received collation result data 108. The display result contains the person authentication indication showing that the person as the collation target is the person already registered in the data collating unit 10, and the status change data 106 (accompanied with situation data 102B,) which is the collation data 108, in the formats of the image and the text (step S26). By displaying the collated status change data 106 and its situation data 102B, it is possible to specify the person as the collation target.

As described above, according to the second embodiment, the status change data storage section 12B in the first embodiment is not required, and the collation is performed by sending the status change data 106 from the status change data generating section 14 directly to the collating section 11. Therefore, a storage region can be reduced and candidates of the collation data 107' can be reduced by excluding the original data 102A from the collation target. Also, by inputting the status data 102B at that time together with the input data 101, it is possible to further reduce collation candidates by collating with only the status change data 106 corresponding to the status data 102B.

[Third Embodiment]

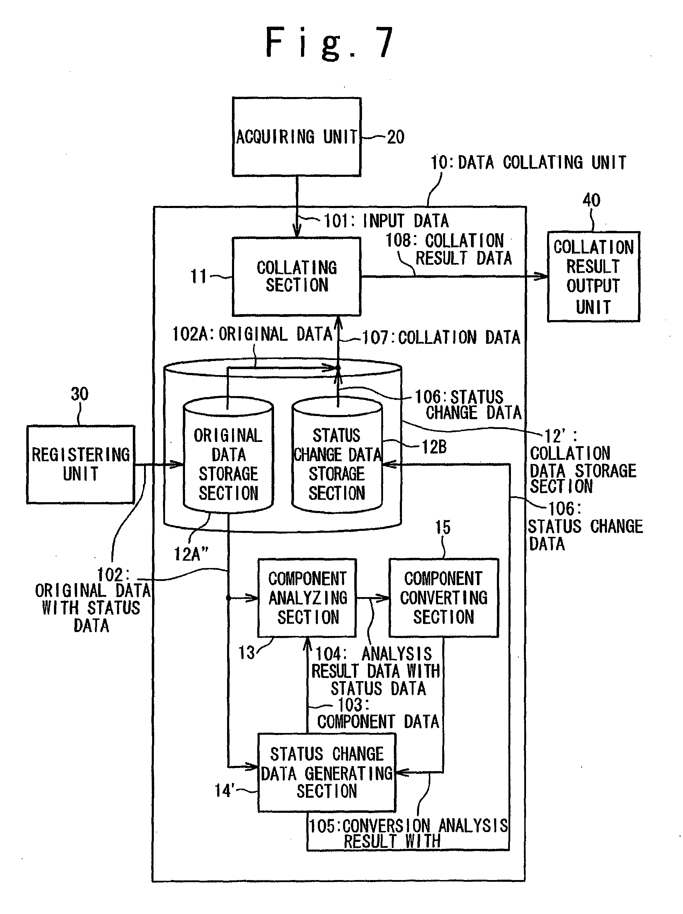

Referring to Fig. 2A and Figs. 7 to 11, the data collating system according to the third embodiment of the present invention will be described below. Fig. 7 is a block diagram showing the configuration of the data collating system according to the third embodiment of the present invention.

The data collating system in the third embodiment includes the data collating unit 10, the acquiring unit 20, the registering unit 30, and the collation result output unit 40, and each of the units is connected to the data collating unit 10.

The data such as a face image and speech data of a person, which are previously inputted into the registering unit 30 for the target of the collation, are registered in the data collating unit 10 as the original data 102A. The data collating unit 10 converts the original data 102A to the status change data 106 on the basis of the status data 102B accompanying to the registered original data 102A. Here, the status data 102B is the data indicating the status change of the person as the object of the collation. The data collating unit 10 carries out the collation of the input data 101 such as the face image read out from the acquiring unit 20 with the collation data 107 of the original data 102A and the status change data 106. The result of the collation is sent to the collation result output unit 40 as the collation result data 108. The collation output unit 40 displays the collation result on the basis of the collation result data 108.

The configurations of the acquiring unit 20, the registering unit 30, and the collation result output unit 40 are same as those of the first embodiment, and therefore, the description will be omitted here.

The data collating unit 10 is a data processing unit exemplified by a workstation and a personal computer. The data collating unit 10 has the collating section 11, the collation data storage section 12', a component converting section 13, a status change data generating section 14', and a component analyzing section 15.

The collation data storage section 12' is connected to the collating section 11, the component analyzing section 13, and the status change data generating section 14'. The component analyzing section 13, the status change data generating section 14', and the component converting section 15 are connected to each other. It should be noted that the collation data storage section 12' and the status change data generating section 14' may be remotely located and connected to the collating section 11 by a communication line or a network.

The configuration of the collating section 11 is same as that of the first embodiment, and therefore, the description will be omitted here.

The collation data storage section 12' is a storage unit such as a memory and a disk. The collation data storage section 12' has an original data storage section 12A'' and the status change data storage section 12B. The original data storage section 12A'' is connected to the registering unit 30 and stores the original data 102 with the status data registered from the registering unit 30. The status change data storage section 12B relates the status change data 106 received from the status change data generating section 14' to a corresponding status data 102B and stores them.

When the original data 102 with the status data is received from the registering unit 30, the collation data storage section 12' sends the original data 102 with the status data to the component analyzing section 13 and the status change data generating section 14' in order to generate the status change data 106. In response to an instruction from the collating section 11, the original data 102A and the status change data 106, which are held, are sent to the collating section 11 as the collation data 107.

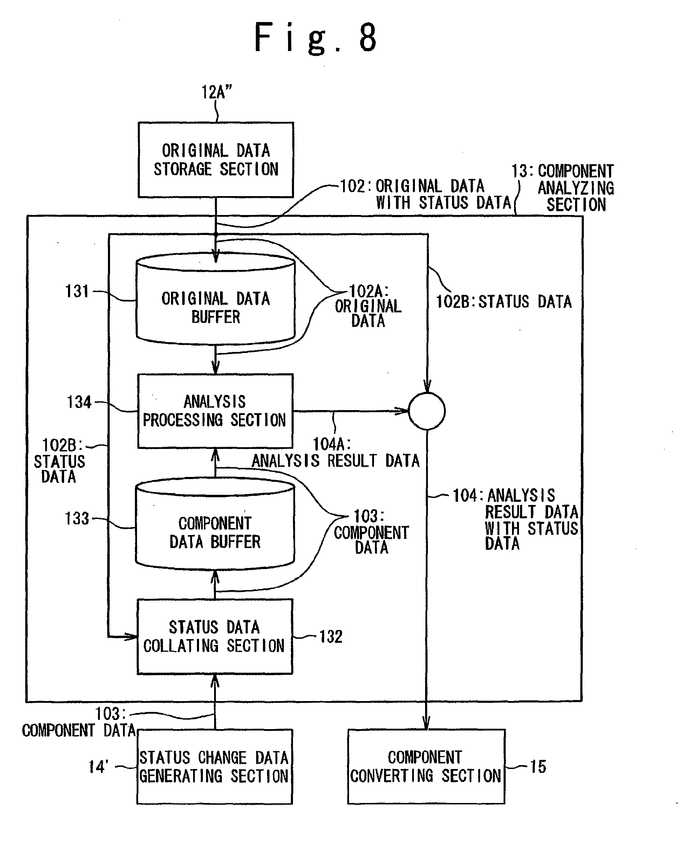

Fig. 8 is a block diagram showing the configuration of the component analyzing section 13 in the data collating system according to the third embodiment of the present invention. The component analyzing section 13 has an original data buffer, a component data buffer 133, a status data collating section 132, and an analysis processing section 134. The original data buffer 131 and the component data buffer 133 are the storage units such as memories and disk apparatuses. The status data collating section 132 and the analysis processing section 134 are the processing section such as a CPU or a program, or a combination of the processing section and the program. Individual units are each connected to each other.

The original data buffer 131 is connected to the original data storage section 12A'', stores the original data 102A received from the original data storage section 12A'' temporarily, sends the original data 102A to the analysis processing section 134 by the designation of the analysis processing section 134.

The status data collating section 132 is connected to the original data storage section 12A'' and the status change data generating section 14', compares the status data 102B received from the original data storage section 12A'' with the status label supplied from the status change data generating section 14', and extracts component data 103 from the component data buffer 141' for each status having the status label corresponding to the status data 102B, to be sent to the component data buffer 133.

The component data buffer 133 temporarily stores the component data 103 received from the status data collating section 132 to send the component data 103 to the analysis processing section 134 in response to the instruction from the analysis processing section 134.

The analysis processing section 134 uses the original data 102A received from the original data buffer 131 and the component data 103 received from the component data buffer 133 and generates analysis result data 104A by the operation described later. On the other hand, the analysis processing section 134 is connected to the original data storage section 12A'' and the component converting section 15, relates the analysis result data 104A to the status data 102B received from the original data storage section 12A'', and sends to the component converting section 15 as the analysis result data 104 accompanied with the status data.

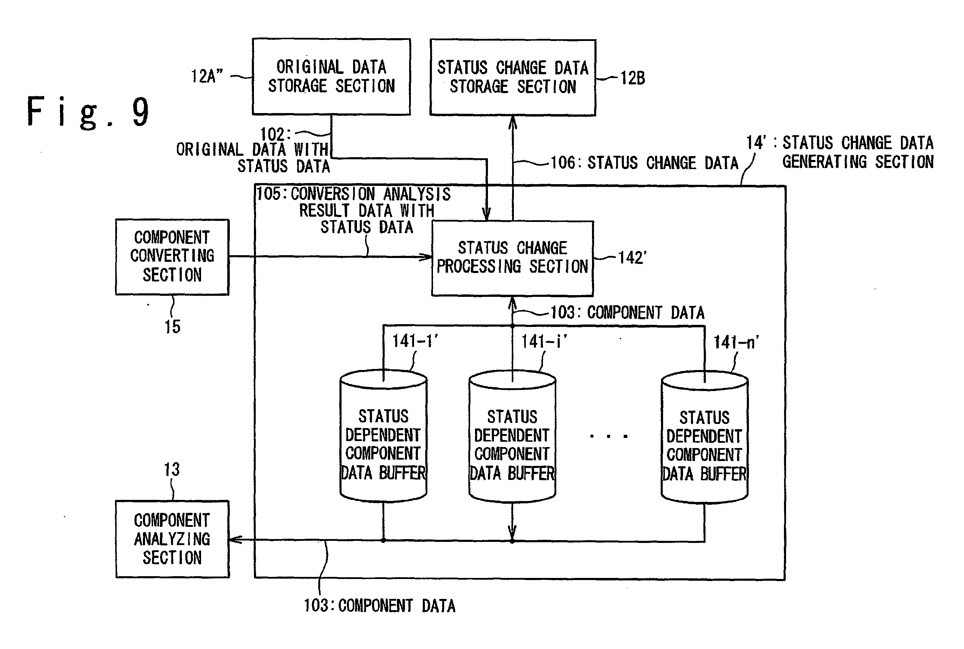

Fig. 9 is a block diagram showing the configuration of the status change data generating section 14' in the data collating system according to the third embodiment of the present invention. The status change data generating section 14' has a plurality of status dependent component data buffers 141-1' to 141-n' and connected to each other, and the status change processing section 142' connected to the plurality of status dependent component data buffers 141-1' to 141-n' for each status.

Each of the plurality of status dependent component data buffers 141-1' to 141-n' (hereafter, "component data status buffers 141'''") corresponds (relates) to the status data 102B, which differs from each other. The component data status buffers 141' has the status label corresponding to the status data 102B of it and is connected to the component analyzing section 13. The component data status buffer 141' stores the component data 103 corresponding to the status label of itself. In other words, the component data status buffer 141'-j stores the component data 103-j corresponding to the status label (status data 102B-j) of itself.

In response to an instruction from the status change processing section 142' to receive the original data 102 with the status data, each of the plurality of status dependent component data buffers 141-1' to 141-n' sends each status label to the component analyzing section 13 to make a request. The component data status buffers 141' and having the status label corresponding to the status data 102B corresponding to the original data 102A sends component data 103, which itself has, to the component analyzing section 13. Or, on the basis of the status change processing section 142', each of the plurality of status dependent component data buffers 141-1' to 141-n' sends the component data 103 to the status change processing section 142' in order to generate the status change data 106.

When receiving the original data 102 with the status data from the original data storage section 12A'', the status change processing section 142' extracts the status label of the component data status buffers 141' and sends to the component analyzing section 13 to make a request. Or, the status change processing section 142' generates the status change data 106 corresponding to the status data 102B from the conversion analysis result data 104 with the status data received from the component converting section 15, and the component data 103, which is accompanied with the status data, of the component data status buffers 141', which has the status label corresponding to its status data 102B, through the operation described later to send to the status change data storage section 12B.

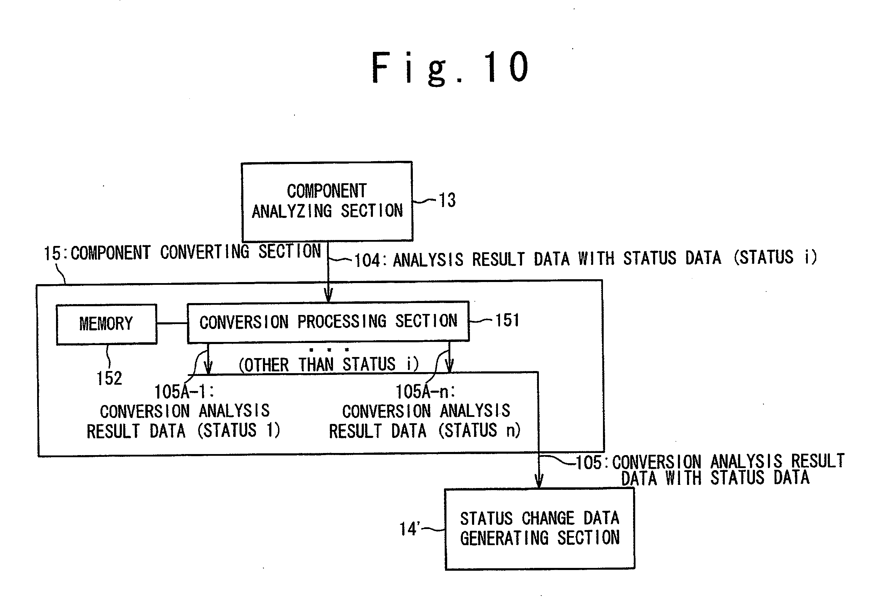

Fig. 10 is a block diagram showing the configuration of the component converting section 15 in the data collating system according to the third embodiment of the present invention. The component converting section 15 has a conversion processing section 151, which is, for example, an processing section such as a CPU or a program, or a combination of the processing section and the program, and a memory 152, which temporarily stores a signal and a data when the conversion processing section 151 executes the operation.

The conversion processing section 151 is connected to the component analyzing section 13 and generates a plurality of conversion analysis result data 105A-1 to 105A-n (except for the data 105A-i) corresponding to a plurality of status data 102B-1 to 102B-n (except 102-i) through the operation shown below on the basis of the analysis result data 104 with the status data received from the component analyzing section 13.

The conversion processing section 151 is connected to the status change data generating section 14', relates the plurality of generated conversion analysis result data 105A-1 to 105A to the corresponding ones of status data 102B-1 to 102B-n (except for the 102-i,) and sends the conversion analysis result data 105 with the status data to the status change data generating section 14'.

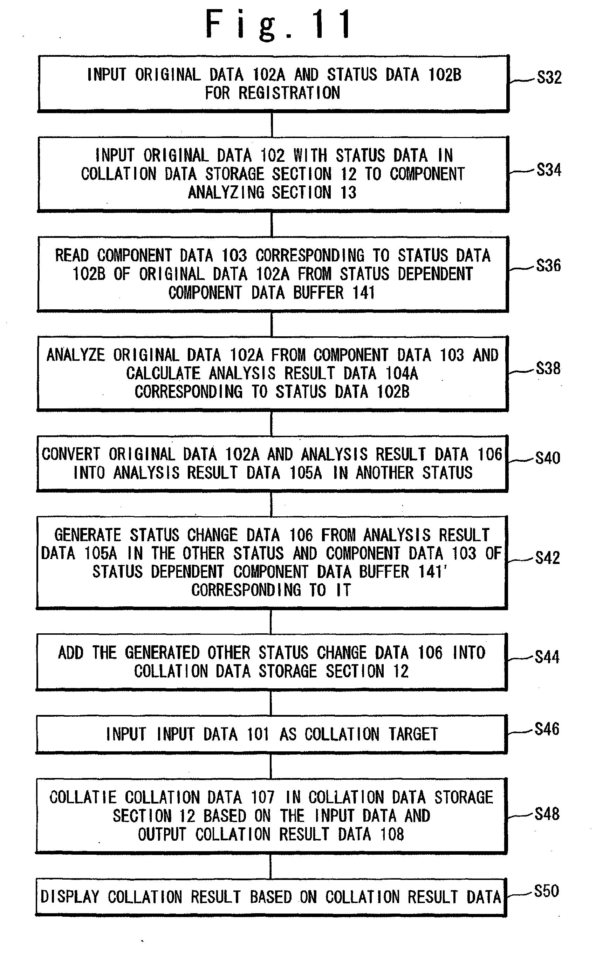

Subsequently, the operation of the data collating system in the third embodiment according to the present invention will be described below. Fig. 11 is a flow chart showing the operation of the data collating system according to the third embodiment of the present invention.

In order to generate and register the collation data 107, the face image of a person as the collation target is scanned (imaged) by using the registering unit 30 before the collation and received by the data collation unit 10 as the original data 102A. At this time, the registration date and the age of the person are supplied as the status data 102B. The original data 102A and the status data 102B are related to each other to be stored in the original data storage section 12A'' of the collation data storage section 12' as the original data 102 with the status data (step S32).

The original data 102 with the status data in the original data storage section 12A'' is sent to the component analyzing section 13 and the status change data generating section 14'. The component analyzing section 13 temporarily stores the received original data 102 with the status data, in the original data buffer 131 (step S34). Or, when receiving the original data 102 with the status data, the status change data generating section 14' sends to the component analyzing section 13, the status label of the plurality of status dependent component data buffers 141-1' to 141-n'. The component analyzing section 13 extracts component data 103-i from the status dependent component data buffer 141-i' having the status label corresponding to the status data 102B and temporarily stores in the component buffer 133 (step S36).

The analysis processing section 134 of the component analyzing section 13 analyzes the original data 102A on the basis of the component data 103-i, and outputs the analysis result data 104-i with the status data corresponding to the status data 102B, to send to the component converting section 15 (step S38) .

In the component converting section 15, the analysis result data 104-i with the status data is converted into the plurality of conversion analysis result data 105A-1 to 105A-n (except for the result data 105A-i) corresponding other plurality of status data 102B-1 to 102B-n (except for the status data 102B-i) which differ from the status data 102B of the analysis result data 104-i with the status data. The component converting section 15 relates the plurality of generated conversion analysis result data 105A-1 to 105A-n (except for the 105A-i) to corresponding the plurality of status data 102B-1 to 102B-n (except for the 102B-i) and sends to the status change data generating section 14' as conversion analysis result data 105-1 to 105-n (except 105-i) accompanied with the status data (step S40).

The status change data generating section 14' generates status change data 106-1 to 106-n (except for the data 106-i) from the conversion analysis result data 105-1 to 105-n (except the 105-i) with the status data, which are received from the component converting section 15, and the component data 103-1 to 103-n (except for the data 103-i) from the status dependent component data buffers 141-1' to 141'-n (except for buffer 141-i,), each of which has the status label corresponding to one of the status data 102B (step S42).

Here, an example of the operation of the status change data generation will be described below by using the original data 102A in the data collating unit 10 in the data collating system according to the third embodiment of the present invention, on the basis of a linear component analysis exemplified by the principal component analysis used generally for component analysis.

The component data 103 held by the status dependent component data buffers 141' of the status change data generating section 14' is generated by converting data A1, A2, ..., Ai ..., Ap in a certain status to important elements U1, U2, ..., Uj ..., Up constituting each data through a certain calculation. In the principal component analysis, the matrix generated by arranging the point elements Ai(x, y) of the respective data as column vectors is as follows.

$$A = \begin{bmatrix} A1(0,0) & \cdots & Ai(0,0) & \cdots & Ap(0,0) \\ \vdots & \cdots & \vdots & \cdots & \vdots \\ A1(x,y) & \cdots & Ai(x,y) & \cdots & Ap(x,y) \\ \vdots & \cdots & \vdots & \cdots & \vdots \\ A1(m,n) & \cdots & Ai(m,n) & \cdots & Ap(m,n) \end{bmatrix}$$

P column vectors of a former half of the orthogonal matrix by applying the above equation to a singular value resolution A= USV$^t$ (S is 0 other than the diagonal components and the diagonal component is arranged in a descending order of absolute values) becomes the component data 103 (U1, U2, ..., Uj, ..., Up).

At this time, in order to relate the status dependent component data buffers 141', between the two of the status dependent component data buffers 141', the original data 102A of a same person (object) is prepared for the number of used components. For example, if orders of the component data 103 are 30, the data of 30 or more (persons) in both the statuses are prepared in two of the status dependent component data buffers 141' to generate the components for the status dependent database.

In the processing carried out by the analysis processing section 134 of the component analyzing section 13, if it is supposed that data of a linear combination of the component data 103 (principal component) is Ip, Ip is expressed by the following equation:

$$\text{Ip} = \text{c1P1} + \text{c2P2} + \text{...} \text{cmPm} \qquad (1)$$

(Pi is a principal component and ci is a coefficient), where a least error coefficient set ci is selected, in which an error from the original data 102A (Io) becomes least, this least error coefficient set ci becomes analysis result data 104A.

This analysis result data 104A is related to the status data 102B corresponding to the original data 102A and is sent to the component converting section 15 as the analysis result 104 with the status data.

In the component converting section 15, a case that the least error coefficient set ci as an analysis result data 104A is converted to a coefficient set dj as a conversion analysis result data 105A corresponding to another status data 102B will be described below.

It is assumed that component data 103 of the status dependent component data buffers 141-i' and 141-j' in the status change data generating section 14' are Pi (i= 1, ..., n) and Qj (j= 1, ..., n,), respectively. Also, it is assumed that their coefficients are ci (i= 1, ..., n) and dj (j= 1, ..., n,), respectively. In this case, the conversion of ci to dj is discussed here. For this conversion, there are used the plurality of data Ip and Jp belonging to both of status data 102B corresponding to the status dependent component data buffers 141-i' and 141-j' in the same person. Ip and Jp are expressed by the following formula.

$$Ip = c1P1 + c2P2 + \cdots + cnPn \quad \cdots (2)$$

$$Jp = d1Q1 + d2Q2 + \cdots + dnQn \quad \cdots (3)$$

If it is assumed that the conversion of ci to dj is the linear conversion T, a coefficient set of a person A registered in the data collating unit 10 is {Ci(A), Dj(A)}, a coefficient set of a person B is {Ci(B), Dj(B)}, ... and a coefficient set of a person N is {Ci(N), Dj(N)}, the relational equation for the conversion is expressed as follows:

$$[Dj(A) 、 Dj(D) 、 \cdots 、 Dj(N)] = T[Ci(A) 、 Ci(D) 、 \cdots 、 Ci(N)] \quad \cdots (4)$$

where, Ci(A) and Dj(A) are the column vectors generated by vertically arranging the coefficients ci and dj of the equations (2) and (3). Therefore, by defining as C = [Ci(A), Ci(D), ..., Ci(N)], D = [Dj(A), Dj(D), ..., Dj(N)], the linear conversion T can be calculated by the following equation (5):

$$T = DC^t (CC^t)^{-1} \quad \cdots (5)$$

By the linear conversion T as described above, the conversion processing section 151 can generate the conversion analysis result data 105A corresponding to other status data 102B, from the analysis result data 104A.

Also, when the conversion from cj to dj is nonlinear conversion, the conversion can be determined by a neural network by using the coefficient set {ci(A), dj(A)} corresponding to the status dependent component data buffers 141-i' and 141-j' in the person A registered in the data collating unit 10, as learning data.

If it is supposed that coefficient set as the conversion analysis result data 105A supplied from component converting section 15 into the status dependent component data buffers 141' is dj, the component data 103 of the status dependent component data status buffer 141 is principal component Qj (subscript j corresponds to dj,) and the status change data 106 reconfigured through the processing of the status change processing section 142' is a linear combination Jp, Jp is expressed by the following equation (6):

$$Jp = d1Q1 + d2Q2 + \cdots + dmQm \quad \cdots (6)$$

The status change data 106 in another status generated as described above is related to a corresponding status data 102B and is recorded to the status change data storage section 12B of the collation storage section 12' (step S44).

Next, the face image of the person as the collation target is scanned (imaged) by the acquiring unit 20 and supplied to the collating section 11 of the data collating unit 10 as the input data 101 (step S46). When the input data 101 is received, the collating section 11 extracts the collation data 107 of the original data 102 with the situation data and the status change data 106, from the collation data storage section 12', and performs the comparing process by the collation processing section 113. Thus, the collation result data 108 is sent to the collation result output device 30 (step S48). The operation of the collation is same as that of the first embodiment.

The collation result output unit 30 displays the collation result on the display screen on the basis of the received collation result data 108. The display result shows person authentication for indicating that the person as the collation target is the person who is already registered in the data collating unit 10, and the collation data 108 is displayed which resembles the collation target as the image and text to specify the person (step S50).

As described above, the feature of the object is decomposed into components, and the status change data 106 is generated to use for the collation, on the basis of the component corresponding to the status data 102B and the analysis result data 104A from the original data 102A. Therefore, high precision collation can be performed by using a statistical status feature difficult to be expressed manually.

It should be noted that even if the collation storage section 12' and the status change data generating section 14' are remotely located and connected to the collating section 11 by a network or even if being connected by a communication line, it should not be limited to that.

[Fourth Embodiment]

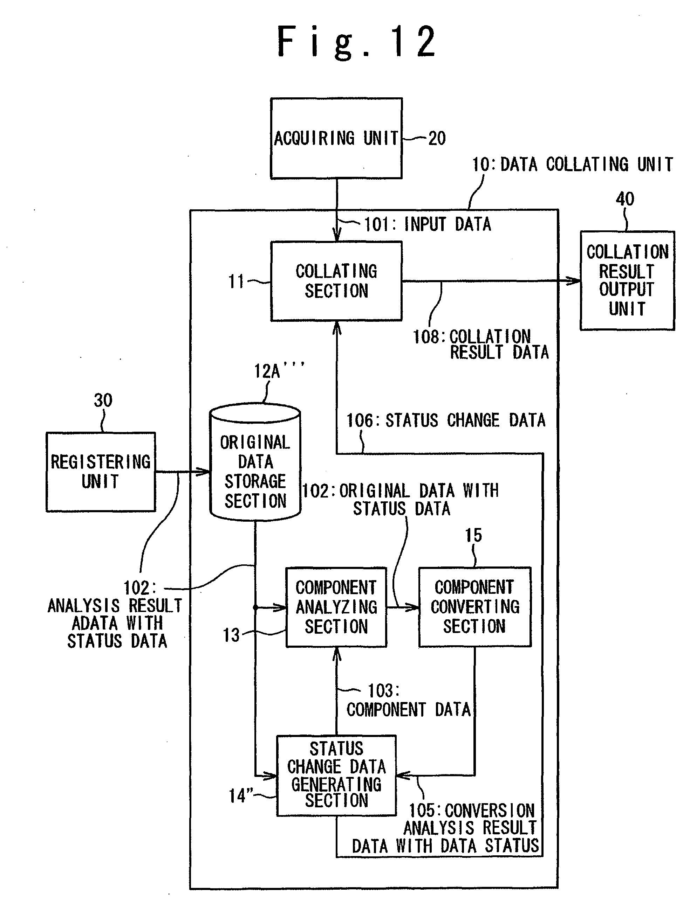

Referring to Fig. 2B and Fig. 12 to 14, the data collating system according to the fourth embodiment of the present invention will be described below. Fig. 12 is a block diagram showing the configuration of the data collating system according to the fourth embodiment of the present invention.

The data collating system according to the fourth embodiment of the present invention includes the data collating unit 10, the acquiring unit 20, the registering unit 30, and the collation result output unit 40, and each of units is connected to the data collating unit 10.

The data such as the face image and speech data of the person, which are previously received by the registering unit 30 for the target of the collation, are registered in the data collating unit 10 as the original data 102A. The data collating unit 10 converts the original data 102A to the status change data 106 on the basis of the status data 102B accompanying to the registered original data 102A. Here, the status data 102B is the data indicative of the status change of the person as the object of the collation. The data collating unit 10 performs the collation of the input data 101 such as the face image read by the acquiring unit 20 with the status change data 106. The result of the collation is sent to the collation result output unit 40 as the collation result data 108 and the collation result output unit 40 displays the collation result on the basis of the collation result data 108.

The configurations of the acquiring unit 20, the registering unit 30, and the collation result output unit 40 are same as those of the first embodiment, and therefore, the description will be omitted here.

The data collating unit 10 is the data processing unit exemplified by a workstation and a personal computer. The data collating unit 10 has the collating section 11, an original data storage section 12A''', the component analyzing section 13, a status change data generating section 14'', and the component analyzing section 15. The status change data generating section 14' is connected to the original data storage section 12''' and the collating section 11. The status change data generating section 14' and the original data storage section 12A''' may be remotely located and connected to the collating section 11 by a communication line or a network.

The collating section 11 is connected to the acquiring unit 20 via the communication line or the network. The collating section 11 collates the input data 101 received from the acquiring unit 20 as the target of the collation with the status change data 106 received from the status change data generating section 14'', and the collation result data 108 is sent to the collation result output unit 40.

The configuration of the collating section 11 is same as that of the second embodiment and the configurations of the component analyzing section 13 and the component analyzing section 15 are same as those of the third embodiment, and therefore, description is omitted (however, the original data storage section 12A'' in Fig. 8 is the original data storage section 12A''').

The original data storage section 12A''' is a storage unit such as a memory and a disk apparatus. The original data storage section 12A''' is connected to the registering unit 30 to store the original data 102 with the situation data registered by the registering unit 30. In order to generate the status change data 106 when the input data 101 is received by the collating section 11, the original data storage section 12A''' sends the registered original data 102 with the situation data to the component analyzing section 13 and the status change data generating section 14''.

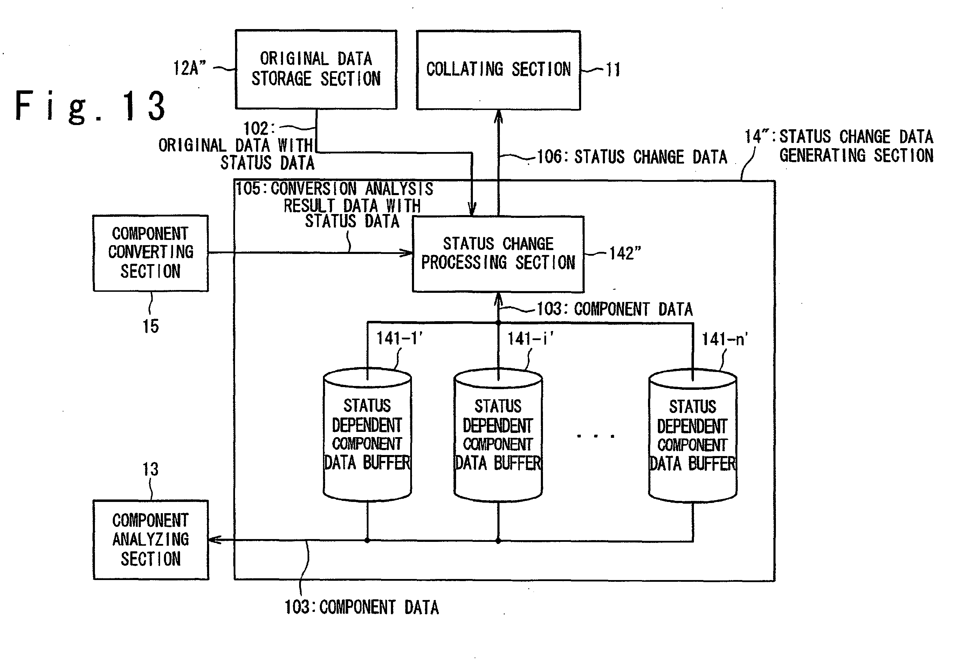

Fig. 13 is a block diagram showing the configuration of the status change data generating section 14'' in the data collating system according to the fourth embodiment of the present invention. The configuration of the status change data generating section 14'' is same as that of the third embodiment and the status change processing section 142'' is connected to the collating section 11 to send the generated status change data 106 to the collating section 11.

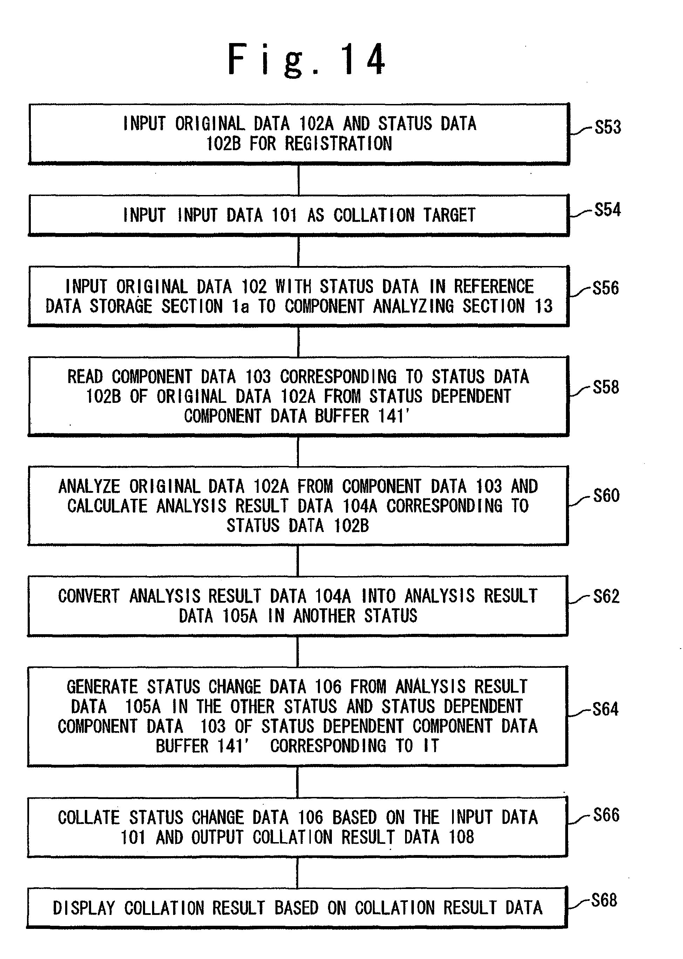

The operation of the data collating system according to the fourth embodiment of the present invention will be described below. Fig. 14 is a flow chart showing an operation of the data collating system according to the fourth embodiment of the present invention.

In order to generate and register the collation data 107', the face image of the person as the collation target is scanned (imaged) by the registering unit 30 before performing the collation, and supplied to the data collating unit 10 as the original data 102A. At this time, the registration date and the age of the person are inputted as the status data 102B. The inputted original data 102A and the status data 102B are related to each other and are stored in the original data storage section 12A''' of the collation storage section 12 as the original data 102 with the status data (step S52).

Next, the face image of the person as the collation target is scanned (imaged) by the acquiring unit 20 and supplied to the collating section 11 of the data collating unit 10 as the input data 101 (step S54). When the input data 101 is received, the original data 102 with the status data of the collation data storage section 12A''' is sent to the component analyzing section 13 and the status change data generating section 14''. The component analyzing section 13 temporarily stores the received original data 102 with the status data in the original data buffer 131 (step S56). Also, when receiving the original data 102 with the status data, the status change generating section 14'' sends the status label of the plurality of status dependent component data buffers 141-1' to 141-n' to the component analyzing section 13. The component analyzing section 13 extracts the component data 103-i from the status dependent component data buffers 141-i', having the status label and corresponding to the inputted status data 102B, and temporarily stores in the component buffer 133 (step S58).

The analysis processing section 134 of the component analyzing section 13 analyzes the original data 102A from the component data 103-i, outputs the analysis result data 104-i accompanied with the status data corresponding to the status data 102B and sends it to the component converting section 15 (step S60).

The component converting section 15 converts the received analysis result data 104-i with the status data into the plurality of conversion analysis result data 105A-1 to 105A-n (except for the data 105A-i) corresponding to another plurality of status data 102B-1 to 102B-n (except 102B-i,) which are differ from the status data 102B of the analysis result data 104-i with the status data. The component converting section 15 relates the plurality of generated conversion analysis result data 105A-1 to 105A-n (except 105A-i) to the plurality of status data 102B-1 to 102B-n (except 102B-i,) and sends to the status change data generating section 14'' as conversion analysis result data 105-1 to 105-n (except for the data 105-i) with the status data (step S62).

The status change data generating section 14'' generates the status change data 106-1 to 106-n (except for the data 106-i) from the conversion analysis result data 105A-1 to 105A-n (except for the data 105A-i,) which are accompanied with status data and received from the component converting section 15, and the components 103-1 to 103-n (except for the data 103-i) of the status dependent component buffers 141-1' to 141-n' (except for the buffer 141-i'), each of which has the status label corresponding to each of status data 102B (step S64). The operation of the conversion is same as that of the third embodiment, and therefore, the description will be omitted here.

The generated status change data 106 in another status is related to the corresponding status data 102B and is sent to the collating section 11' in response to an instruction from the status change processing section 142''. It should be noted that the status change data 106 may be extracted in accordance with the control of the collating section 11. The collating section 11 performs the comparing process with the inputted data 101 by the collation processing section 113 by using the status change data 106 sent from the status change data generating section 14 as the collation data 107' and sends the collation result data 108 to the collation result output device 30 (step S66). The operation of the collation is same as that of the second embodiment.

The collation result output unit 40 displays the collation result on the display screen on the basis of the received collation result data 108. The display result is person authentication for indicating that the person as the collation target is the person who is already registered in the data collating unit 10, and the status change data 106 (with the situation data 102B) as the collation data 108, as the image and text (step S26). By displaying the collated status change data 106 and the situation data 102B thereof, it is possible to specify the person as the collation target.

As described above, the fourth embodiment does not require the status change data storage section 12B in the third embodiment and sends the status change data 106 directly from the status change data generating section 14'' to the collating section 11 for collation. Therefore, the storage area can be reduced and the original data 102A can be excluded from the target of the collation, resulting in reduction of candidates of the collation data 107'. Also, when the situation data 102B is received together with the input data 101 at that time, the collation is performed on the status change data 106 corresponding to the situation data 102B thereof, and therefore, the collation candidates can be reduced.

It should be noted that the collation data storage section 12, the component analyzing section 13, the status change data generating section 14, and the component converting section 15 may be connected to the collating section 11 by a network and located remotely for use, and also connected by a communication line and used locally.

In the data collating system according to the present invention, in the collation of objects changing the status, the status change of the registered data used for collation is automatically added. Therefore, the load of an operator in the collation can be reduced. Also, the acquiring unit 20, the registering unit 30, and the collation result output unit 40, which have already existed, can be used to easily permit constructing and changing the system. In addition, the status buffer 141' corresponding to a new status data (the first and second embodiments,) or the status dependent component data buffers 141' (the third and fourth embodiments) are added to the status change data generating section 14 so that it is possible to improve preciseness of the collation and change the condition of the status change.

**Claims**

1. A data collating apparatus comprising:

   an original data storage section configured to relate and hold an original data of an object and a first status data indicating a status of the object;
   a status change data generating section configured to generate a plurality of status change data related to a plurality of second status data indicating a plurality of other statuses of the object based on said original data; and
   a collating unit configured to collate input data as an inputted data of the object for the collation with each of the plurality of status change data and to extract the status change data in which a difference between the input data and the plurality of status change data is smallest.

2. The data collating apparatus according to claim 1, further comprising:

   a status change data storage section configured to store the plurality of status change data,
   wherein said original data and said plurality of status change data are sent to said collating unit as the plurality of collation data, and
   said collating unit compares the input data with each of the plurality of collation data and extracts a collation data whose difference from the input data is smallest.

3. The data collating apparatus according to claim 1 or 2, wherein said collating unit performs the extraction when the difference is smallest and when the difference is equal to or less than a threshold value.

4. The data collating apparatus according to any of claims 1 to 3, wherein said status change data generating section comprises:

   a status change processing section configured to generate the plurality of status change data corresponding to the plurality of second status data from said original data corresponding to said first status data by a neural network which has learnt data separated for said first status data and said plurality of second status data; and
   status buffers, each of which stores the status change data corresponding to that of the plurality of status change data.

5. The data collating apparatus according to any of claims 1 to 3, further comprising:

   a plurality of status dependent component data buffers, each of which is provided for one of said first status data and said plurality of second status data, and which is configured to hold a status label showing a third status data as each of said first status data and said plurality of second status data and a component data corresponding to the third status data, and is installed in each of the first status data and the plurality of second status data;
   a component analyzing section configured to extract the component data from one of said plurality of status dependent component data buffers which has a status label corresponding to the first status data, analyze said original data based on the component data, and output a first analysis result data corresponding to the first status data; and
   a component converting unit configured to convert the plurality of second status data into a plurality of second analysis result data based on the first analysis result data, and
   said status change data generating section comprises:

      a status change processing section configured to generate the plurality of status change data based on the plurality of second analysis result data and a plurality of component data of a plurality of status dependent component data buffers, which have the status labels corresponding to the plurality of second statuses data among the plurality of status dependent component data buffers.

6. The data collating apparatus according to any of claims 1 to 5, wherein the input data and said original data are biometrics data.

7. The data collating apparatus according to any of claims 1 to 6, wherein said first status data and said plurality of second status data are data in statuses corresponding to a secular change of the object.

8. The data collating apparatus according to any of claims 1 to 7, wherein the target object and the object are a face of a person,
the input data and the original data are the face image data, and
the first status data and the plurality of second status data are data expressing an expression of a face.

9. A data collating system comprising:

an acquiring unit configured to acquire data of a target object for collation as an input data; and
a data collating unit configured to collate an original data of the object with the input data,
wherein said data collating unit comprises:

an original data storage section configured to store said original data and first status data showing a status of the object, which are related to each other;
a status change data generating section configured to generate a plurality of status change data related to a plurality of second status data showing a plurality of other statuses of the object based on said original data; and
a collating section configured to compare said input data with each of said plurality of status change data to extract one of said plurality of status change data, which has smallest difference from the input data.

10. The data collating system according to claim 9, wherein said data collating unit further comprises a status change data storage section configured to store said plurality of status change data,
said original data and said plurality of status change data are sent to said collating section as a plurality of collation data, and
said collating section collates the input data with each of said plurality of collation data to extract one of said plurality of collation data, which has the smallest difference from the input data.

11. The data collating system according to claim 9 or 10, wherein said collating section performs the extraction when the difference is smallest and when the difference is equal to or less than a threshold value.

12. The data collating system according to any of claims 9 to 11, wherein said status change data generating section comprises:

a status change processing section configured to generate said plurality of status change data corresponding to said plurality of second status data from said original data corresponding to said first status data by using a neural network having learnt said first status data and said plurality of second status data, and
status buffers, each of which is configured to store the status change data corresponding to one of said plurality of status change data.

13. The data collating system according to any of claims 9 to 11, wherein said data collating unit further comprising:

a plurality of status dependent component data buffers configured to store a status label indicating a third status data as each of said first status data and said plurality of second status data and a component data corresponding to said third status data, and respectively provided for said first status data and said plurality of second status data;
a component analyzing section configured to extract said component data from one of said plurality of status dependent component data buffers which has said status label corresponding to said first status data, analyze said original data based on said component data, and output a first analysis result data corresponding to said first status data; and
a component converting unit configured to convert said first analysis result data to a plurality of second analysis result data corresponding to said plurality of second status data, and
said status change data generating section comprises:

a status change processing section configured to generate said plurality of status change data based on said plurality of second analysis result data and said component data of ones of said plurality of status dependent component data buffers which have said status labels corresponding to said plurality of second status data.

**14.** The data collating system according to any of claims 9 to 13, wherein said input data and said original data are biometrics data.

**15.** The data collating system according to claims 9 to 14, wherein said first status data and said plurality of second status data are data in a status corresponding to a secular change of the object.

**16.** The data collating system according to any of claims 9 to 15, wherein said target object and said object are a face of a person,
said input data and said original data are face image data, and
said first status data and said plurality of second status data are data expressing an expression of the face.

**17.** The data collating system according to any of clams 9 to 16, further comprising:

a registering unit configured to read said original data from the object to supply said original data in relation to said first status data.

**18.** The data collating system according to claims 9 to 17, further comprising:

a collation result output unit configured to output a collation result based on said collation result data outputted from said data collating unit.

**19.** A data collating method comprising:

(a) acquiring an original data of an object and a first status data indicating a status of the object;
(b) generating a plurality of status change data related to a plurality of second status data indicating another status of a plurality of objects based on said original data;
(c) collating an input data as a data of a target object of collation with each of said plurality of status change data; and
(d) outputting a result of the collation.

**20.** The data collating method according to claim 19, wherein said (c) collating comprises:

(c1) collating said input data with each of said plurality of collation data by using said original data and said plurality of status change data as a plurality of collation data.

**21.** The data collating method according to claim 19 or 20, wherein said (b) generating comprises:

(b1) generating said plurality of status change data from said original data by a conversion method having learnt data separated for each of said first status data and said plurality of second status data.

**22.** The data collating method according to claim 19 or 20, wherein said (b) generating comprises:

(b2) decomposing said original data into component data corresponding to said first status data to generate a first analysis result data; and
(b3) generating said plurality of status change data based on said first analysis result data and said plurality of component data corresponding to said plurality of second status data.

# Fig. 1

# Fig. 2A

20

ACQUIRING UNIT

11: COLLATING SECTION

111

101: INPUT DATA

113

112

INPUT DATA
BUFFER

COLLATION
PROCESSING
SECTION

COLLATION
DATA
BUFFER

107:
COLLATION DATA

COLLATION RESULT
OUTPUT UNIT

COLLATION DATA
STORAGE SECTION

40

12

# Fig. 2B

**20**

ACQUIRING UNIT

**11 : COLLATING SECTION**

**111**

**101 : INPUT DATA**

**113**

**112'**

INPUT DATA BUFFER

COLLATION PROCESSING SECTION

COLLATION DATA BUFFER

**107' : COLLATION DATA**

**106 : STATUS CHANGE DATA**

COLLATION RESULT OUTPUT UNIT

STATUS CHANGE DATA GENERATING SECTION

**40**

**14**

EP 1 791 088 A1

# Fig. 3

COLLATION DATA
STORAGE SECTION ~12

14: STATUS CHANGE DATA
GENERATING SECTION

STATUS CHANGE
PROCESSING SECTION

102: ORIGINAL DATA WITH
STATUS DATA

142

106: STATUS CHANGE DATA

141-1  141-i

141-n

STATUS
BUFFER

STATUS
BUFFER

· · ·

STATUS
BUFFER

~106-1: STATUS CHANGE DATA · · ·
(EXCEPT STATUS i)

106: STATUS CHANGE DATA

106-n:
STATUS
CHANGE DATA

23

# Fig. 4

INPUT ORIGINAL DATA 102A AND STATUS DATA 102B FOR REGISTRATION ——S2

INPUT ORIGINAL DATA 102 WITH STATUS DATA IN COLLATION DATA STORAGE SECTION 12 TO STATUS BUFFER 141 HAVING STATUS LABEL CORRESPONDING TO DATA 102 ——S4

CONVERT ORIGINAL DATA 102A TO STATUS CHANGE DATA 106 IN STATUS OTHER THAN IT BY LEARNED NEURAL NETWORK ——S6

ADD THE GENERATED STATUS CHANGE DATA 106 IN ANOTHER STATUS TO COLLATION DATA STORAGE SECTION 12 ——S8

INPUT INPUT DATA 101 AS COLLATION TARGET ——S10

REFER TO COLLATION DATA 107 IN COLLATION DATA STORAGE SECTION 12 BASED ON THE INPUT DATA AND OUTPUT OUTPUT COLLATION RESULT DATA 108 ——S12

DISPLAY COLLATION RESULT BASED ON COLLATION RESULT DATA ——S14

# Fig. 5

ACQUIRING UNIT ~20

10: DATA COLLATING UNIT

~101: INPUT DATA

40

COLLATING SECTION    11

COLLATION RESULT OUTPUT UNIT

102: ORIGINAL DATA WITH STATUS DATA

108: COLLATION RESULT DATA

12A'

ORIGINAL DATA STORAGE SECTION

REGISTERING UNIT

106: STATUS CHANGE DATA

30

STATUS CHANGE DATA GENERATING SECTION ~14

102: ORIGINAL DATA WITH STATUS DATA

# Fig. 6

| | |
|---|---|
| INPUT ORIGINAL DATA 102A AND STATUS DATA 102B FOR REGISTRATION | —S16 |
| INPUT INPUT DATA 101 AS COLLATION TARGET | —S18 |
| INPUT ORIGINAL DATA 102 WITH STATUS DATA IN REFERENCE DATA STORAGE SECTION 12A TO STATUS BUFFER 141 HAVING STATUS LABEL CORRESPONDING TO DATA 102 | —S20 |
| CONVERT ORIGINAL DATA TO STATUS CHANGE DATA 106 IN IN STATUS OTHER THAN IT BY LEARNED NEURAL NETWORK | —S22 |
| COLLATE STATUS CHANGE DATA 106 BASED ON THE INPUT DATA AND OUTPUT COLLATION RESULT DATA 108 | —S24 |
| DISPLAY COLLATION RESULT BASED ON COLLATION RESULT DATA | —S26 |

# Fig. 7

# Fig. 8

12A"

ORIGINAL DATA
STORAGE SECTION

102: ORIGINAL DATA
WITH STATUS DATA

13: COMPONENT
ANALYZING
SECTION

131 — ORIGINAL DATA
BUFFER

102A:
ORIGINAL
DATA

102B: STATUS DATA

134 — ANALYSIS
PROCESSING SECTION

102B:
STATUS
DATA

104A:
ANALYSIS RESULT DATA

104: ANALYSIS
RESULT DATA
WITH STATUS
DATA

133 — COMPONENT
DATA BUFFER

103:
COMPONENT
DATA

STATUS DATA
COLLATING SECTION — 132

103:
COMPONENT DATA

14' — STATUS CHANGE DATA
GENERATING SECTION

COMPONENT
CONVERTING SECTION — 15

# Fig. 9

STATUS CHANGE DATA STORAGE SECTION — 12B

12A" — ORIGINAL DATA STORAGE SECTION

102: ORIGINAL DATA WITH STATUS DATA

106: STATUS CHANGE DATA

14': STATUS CHANGE DATA GENERATING SECTION

105: CONVERSION ANALYSIS RESULT DATA WITH STATUS DATA

COMPONENT CONVERTING SECTION

15

STATUS CHANGE PROCESSING SECTION — 142'

103: COMPONENT DATA

141-1'

141-i'

141-n'

STATUS DEPENDENT COMPONENT DATA BUFFER

STATUS DEPENDENT COMPONENT DATA BUFFER

· · ·

STATUS DEPENDENT COMPONENT DATA BUFFER

13

COMPONENT ANALYZING SECTION

103: COMPONENT DATA

EP 1 791 088 A1

```
                          ┌─────────────────────┐
                          │     COMPONENT       │
                          │  ANALYZING SECTION  │──13
                          └─────────────────────┘
15:COMPONENT CONVERTING SECTION        │
                                       │──104:ANALYSIS RESULT DATA WITH STATUS DATA (STATUS i)
                                       ▼
  ┌──────────┐   ┌────────────────────────────────┐
  │  MEMORY  │───│  CONVERSION PROCESSING SECTION │──151
  └──────────┘   └────────────────────────────────┘
       │              . . .  (OTHER THAN STATUS i)
      152        105A-1:                105A-n:
             CONVERSION ANALYSIS   CONVERSION ANALYSIS
             RESULT DATA (STATUS 1) RESULT DATA (STATUS n)
                                              │──105:CONVERSION ANALYSIS RESULT
                                              ▼        DATA WITH STATUS DATA
                          ┌─────────────────────┐
                          │  STATUS CHANGE DATA │
                      14'─│  GENERATING SECTION │
                          └─────────────────────┘
```

EP 1 791 088 A1

# Fig. 11

```
┌─────────────────────────────────────────────────────┐
│  INPUT ORIGINAL DATA 102A AND STATUS DATA 102B        │──S32
│              FOR REGISTRATION                          │
└─────────────────────────────────────────────────────┘
                         │
┌─────────────────────────────────────────────────────┐
│  INPUT ORIGINAL DATA 102 WITH STATUS DATA IN          │
│  COLLATION DATA STORAGE SECTION 12 TO COMPONENT        │──S34
│              ANALYZING SECTION 13                      │
└─────────────────────────────────────────────────────┘
                         │
┌─────────────────────────────────────────────────────┐
│  READ COMPONENT DATA 103 CORRESPONDING TO STATUS DATA │
│  102B OF ORIGINAL DATA 102A FROM STATUS DEPENDENT      │──S36
│           COMPONENT DATA BUFFER 141                    │
└─────────────────────────────────────────────────────┘
                         │
┌─────────────────────────────────────────────────────┐
│  ANALYZE ORIGINAL DATA 102A FROM COMPONENT DATA 103 AND│
│        CALCULATE ANALYSIS RESULT DATA 104A             │──S38
│          CORRESPONDING TO STATUS DATA 102B             │
└─────────────────────────────────────────────────────┘
                         │
┌─────────────────────────────────────────────────────┐
│ CONVERT ORIGINAL DATA 102A AND ANALYSIS RESULT DATA 106│──S40
│   INTO ANALYSIS RESULT DATA 105A IN ANOTHER STATUS     │
└─────────────────────────────────────────────────────┘
                         │
┌─────────────────────────────────────────────────────┐
│  GENERATE STATUS CHANGE DATA 106 FROM ANALYSIS RESULT  │
│ DATA 105A IN THE OTHER STATUS AND COMPONENT DATA 103 OF│──S42
│   STATUS DEPENDENT COMPONENT DATA BUFFER 141'          │
│               CORRESPONDING TO IT                      │
└─────────────────────────────────────────────────────┘
                         │
┌─────────────────────────────────────────────────────┐
│  ADD THE GENERATED OTHER STATUS CHANGE DATA 106 INTO   │──S44
│         COLLATION DATA STORAGE SECTION 12              │
└─────────────────────────────────────────────────────┘
                         │
┌─────────────────────────────────────────────────────┐
│     INPUT INPUT DATA 101 AS COLLATION TARGET           │──S46
└─────────────────────────────────────────────────────┘
                         │
┌─────────────────────────────────────────────────────┐
│ COLLATIE COLLATION DATA 107 IN COLLATION DATA STORAGE  │
│     SECTION 12 BASED ON THE INPUT DATA AND             │──S48
│         OUTPUT COLLATION RESULT DATA 108               │
└─────────────────────────────────────────────────────┘
                         │
┌─────────────────────────────────────────────────────┐
│ DISPLAY COLLATION RESULT BASED ON COLLATION RESULT DATA│──S50
└─────────────────────────────────────────────────────┘
```

# Fig. 12

ACQUIRING UNIT ─20

10: DATA COLLATING UNIT

101: INPUT DATA

40

COLLATION RESULT OUTPUT UNIT

11─ COLLATING SECTION

108: COLLATION RESULT DATA

12A'''

30

106: STATUS CHANGE DATA

REGISTERING UNIT

ORIGINAL DATA STORAGE SECTION

102: ORIGINAL DATA WITH STATUS DATA

15

102: ANALYSIS RESULT ADATA WITH STATUS DATA

13─

COMPONENT ANALYZING SECTION

COMPONENT CONVERTING SECTION

103: COMPONENT DATA

STATUS CHANGE DATA GENERATING SECTION

14"─

105: CONVERSION ANALYSIS RESULT DATA WITH DATA STATUS

# Fig. 13

ORIGINAL DATA STORAGE SECTION — 12A"

COLLATING SECTION — 11

102: ORIGINAL DATA WITH STATUS DATA

106: STATUS CHANGE DATA

14": STATUS CHANGE DATA GENERATING SECTION

105: CONVERSION ANALYSIS RESULT DATA WITH STATUS DATA

COMPONENT CONVERTING SECTION — 15

STATUS CHANGE PROCESSING SECTION — 142"

103: COMPONENT DATA

141-1'  141-i'  141-n'

STATUS DEPENDENT COMPONENT DATA BUFFER

STATUS DEPENDENT COMPONENT DATA BUFFER

. . .

STATUS DEPENDENT COMPONENT DATA BUFFER

COMPONENT ANALYZING SECTION — 13

103: COMPONENT DATA

EP 1 791 088 A1

33

# Fig. 14

| INPUT ORIGINAL DATA 102A AND STATUS DATA 102B FOR REGISTRATION | S53 |

| INPUT INPUT DATA 101 AS COLLATION TARGET | S54 |

| INPUT ORIGINAL DATA 102 WITH STATUS DATA IN REFERENCE DATA STORAGE SECTION 1a TO COMPONENT ANALYZING SECTION 13 | S56 |

| READ COMPONENT DATA 103 CORRESPONDING TO STATUS DATA 102B OF ORIGINAL DATA 102A FROM STATUS DEPENDENT COMPONENT DATA BUFFER 141' | S58 |

| ANALYZE ORIGINAL DATA 102A FROM COMPONENT DATA 103 AND CALCULATE ANALYSIS RESULT DATA 104A CORRESPONDING TO STATUS DATA 102B | S60 |

| CONVERT ANALYSIS RESULT DATA 104A INTO ANALYSIS RESULT DATA 105A IN ANOTHER STATUS | S62 |

| GENERATE STATUS CHANGE DATA 106 FROM ANALYSIS RESULT DATA 105A IN THE OTHER STATUS AND STATUS DEPENDENT COMPONENT DATA 103 OF STATUS DEPENDENT COMPONENT DATA BUFFER 141' CORRESPONDING TO IT | S64 |

| COLLATE STATUS CHANGE DATA 106 BASED ON THE INPUT DATA 101 AND OUTPUT COLLATION RESULT DATA 108 | S66 |

| DISPLAY COLLATION RESULT BASED ON COLLATION RESULT DATA | S68 |

## INTERNATIONAL SEARCH REPORT

| International application No. |
| --- |
| PCT/JP2005/016503 |

A. CLASSIFICATION OF SUBJECT MATTER
*G06T7/00* (2006.01)

According to International Patent Classification (IPC) or to both national classification and IPC

B. FIELDS SEARCHED

Minimum documentation searched (classification system followed by classification symbols)
*G06T7/00* (2006.01)

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2004-102359 A (Kabushiki Kaisha Kokusai Denki Tsushin Kiso Gijutsu Kenkyusho), 02 April, 2004 (02.04.04), Par. Nos. [0054] to [0067] (Family: none) | 1-22 |
| Y | JP 2003-67339 A (Mitsubishi Electric Corp.), 07 March, 2003 (07.03.03), Par. No. [0028] (Family: none) | 1-22 |
| A | JP 11-316836 A (Omron Corp.), 16 November, 1999 (16.11.99), Par. No. [0041] (Family: none) | 3,11 |

☒ Further documents are listed in the continuation of Box C.　　☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>20 October, 2005 (20.10.05) | Date of mailing of the international search report<br>08 November, 2005 (08.11.05) |
| --- | --- |
| Name and mailing address of the ISA/<br>　Japanese Patent Office | Authorized officer |
| Facsimile No. | Telephone No. |

Form PCT/ISA/210 (second sheet) (April 2005)

**INTERNATIONAL SEARCH REPORT**

| International application No. |
|---|
| PCT/JP2005/016503 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2000-357221 A  (Minolta Co., Ltd.),<br>26 December, 2000 (26.12.00),<br>Par. No. [0002]<br>(Family: none) | 8,16 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6556196 B
- JP P200344858 A
- JP 10171988 A